# EUROPEAN PATENT SPECIFICATION

(11) **EP 3 672 347 B1**
(45) Date of publication and mention of the grant of the patent: **22.10.2025**
(21) Application number: 18852840.0
(22) Date of filing: 04.09.2018
(51) Int. Cl.: H04W 72/21, H04L 5/00, H04W 74/0833

(54) **SCHEDULING REQUEST SENDING METHOD AND DEVICE**
PLANUNGSANFRAGESENDEVERFAHREN UND -VORRICHTUNG
PROCÉDÉ ET DISPOSITIF D'ÉMISSION DE DEMANDE DE PROGRAMMATION

(30) Priority: 08.09.2017 CN 201710806346
(43) Date of publication of application: 24.06.2020
(73) Proprietor: Huawei Technologies Co., Ltd., Longgang District Shenzhen, Guangdong 518129 (CN)
(72) Inventor: LI, Hong, Shenzhen, Guangdong 518129 (CN); HAN, Feng, Shenzhen, Guangdong 518129 (CN); JIN, Yinghao, Shenzhen, Guangdong 518129 (CN)
(74) Representative: Pfenning, Meinig & Partner mbB
(86) International application number: PCT/CN2018/103946
(87) International publication number: WO 2019/047823

(56) References cited:
- WO-A1-2017/014715
- CN-A- 101 932 019
- CATT: "Further Consideration on Multiple SR Configurations", vol. RAN WG2, no. Qingdao, China; 20170627 - 20170629, 26 June 2017 (2017-06-26), XP051300880, Retrieved from the Internet <URL:http://www.3gpp.org/ftp/Meetings_3GPP_SYNC/RAN2/Docs/> [retrieved on 20170626]
- HUAWEI ET AL: "Details on multiple SR configurations", vol. RAN WG2, no. Berlin, Germany; 20170821 - 20170825, 20 August 2017 (2017-08-20), XP051318165, Retrieved from the Internet <URL:http://www.3gpp.org/ftp/Meetings_3GPP_SYNC/RAN2/Docs/> [retrieved on 20170820]
- HUAWEI: "R2-1706900: Support of Multiple SR Configurations", 3GPP TSG-RAN2 MEETING #NR_AHS., 29 June 2017 (2017-06-29), pages 1 - 2, XP051301397

## Description

### TECHNICAL FIELD

The present invention relates to the field of wireless communications, and in particular, to a method for transmitting a scheduling request, and corresponding terminal device and computer-readable medium in a wireless network.

### BACKGROUND

In a long term evolution (Long Term Evolution, LTE) system, if a terminal device does not need to send uplink data, a base station does not need to allocate an uplink resource to the terminal device, to reduce consumed system resources. When the terminal device needs to send uplink data to the base station, the terminal device needs to request the base station to allocate an uplink resource for the terminal device to send the uplink data. Therefore, LTE provides an uplink scheduling request (scheduling request, SR) mechanism. Specifically, the base station performs a media access control layer (media access control, MAC) configuration on the terminal device served by the base station. The media access control configuration includes an SR configuration, used to configure a resource used by the terminal device to transmit an SR. As described in the 3GPP technical specification TS36.331 v14.0.0, the SR configuration includes a set of SR parameters used to indicate resources used by the terminal device to transmit an SR, for example, resources, on which an SR is transmitted to the base station, of a physical uplink control channel (physical uplink control channel, PUCCH), and a time period in which an SR is transmitted to the base station. When the terminal device needs to send uplink data, the terminal device transmits the SR to the base station on a proper PUCCH resource based on the SR configuration, to notify the base station that the terminal device needs the uplink resource to send the uplink data. Usually, after receiving the SR, the base station allocates an uplink resource to the terminal device, and sends an uplink grant (uplink grant) to the terminal device, to instruct the terminal device to send a buffer status report (buffer status report, BSR) on the uplink resource indicated by the uplink grant. The BSR is used to indicate a data volume of to-be-sent uplink data currently buffered in the terminal device. After receiving the BSR, the base station may further allocate an uplink resource for the uplink data based on the data volume that is of the to-be-sent uplink data and that is indicated by the BSR, and resend the uplink grant to the terminal device, so that the terminal device can send the uplink data on the uplink resource indicated by the uplink grant sent for the second time. 3GPP DRAFT R2-1706367 discusses how to link multiple SR configurations with TTI/numerology information and other SR-related configuration and timers. 3GPP DRAFT R2-1708265 discusses issues regarding the support of multiple SR configurations. Document HUAWEI: "R2-1706900: Support of Multiple SR Configurations" also represents an example of the available prior art.

With rapid development of wireless communications technologies, a 5th generation (5th Generation, 5G) wireless communications technology has become a popular subject in the industry currently. However, there is no proper solution currently to how to schedule an uplink resource in a 5G system.

### SUMMARY

This application provides a method for transmitting a scheduling request, a terminal device and a computer-readable storage medium according to the independent claims, to implement differentiated scheduling requests of different services.

According to a first aspect, this application provides a method for transmitting a scheduling request. The method includes: obtaining, by a terminal device, an SR configuration sent by an access network device, where the SR configuration includes SR parameters corresponding to a plurality of wireless physical layer parameter numerologies; and selecting, by the terminal device based on the SR configuration, one SR parameter corresponding to a numerology, if there is to-be-sent uplink data on a logical channel LCH of the terminal device, and transmitting an SR to the access network device on an SR resource indicated by the SR parameter.

According to the method for transmitting a scheduling request of the first aspect of this application, the terminal device transmits the SR to the access network device based on a service of the to-be-sent uplink data by using a numerology and an SR configuration that correspond to the LCH on which the data is located. The access network device can identify scheduling requirements of different services, and rapidly and properly allocate uplink resources to different services, to implement differentiated scheduling of different services.

In a possible implementation, the SR configuration includes identifiers of a plurality of numerologies and an SR parameter corresponding to each of the plurality of numerologies.

In a possible implementation, the SR parameter includes a configuration of at least one of the following: an SR physical uplink control channel resource index, an SR configuration index, a maximum number of SR transmission, and an SR prohibit timer.

When determining that at least one numerology corresponding to the LCH has an SR parameter, and an SR resource indicated by the SR parameter is available, the terminal device selects a first SR parameter according to a preset policy, where the first SR parameter corresponds to a first numerology; and transmits the SR on a first SR resource indicated by the first SR parameter.

According to the method for transmitting a scheduling request provided in this application, the terminal device transmits the SR to the access network device based on a service of the to-be-sent uplink data by using a numerology and an SR configuration that correspond to the LCH on which the data is located. The access network device can identify scheduling requirements of different services, and rapidly and properly allocate uplink resources to different services, to implement differentiated scheduling of different services.

In a possible implementation, when a number of SR transmission from the terminal on the first SR resource reaches a first maximum number of SR transmission in the first SR parameter, the terminal device stops transmitting the SR on the first SR resource.

In a possible implementation, if a number of SR transmission on the first SR resource reaches the first maximum number of SR transmission, when determining that in addition to the first numerology, the first LCH further corresponds to a second numerology, and a second SR resource indicated by a second SR parameter corresponding to the second numerology is available, the terminal device selects the second SR parameter configuration according to the preset policy, and transmits the SR on the second SR resource.

According to the method for transmitting a scheduling request provided in this application, after the terminal device fails, for a plurality of times, to request an uplink grant by transmitting the SR by using one proper numerology, the terminal device reselects another proper numerology to transmit the SR, to reduce an unnecessary random access procedure, and reduce a delay and a possible conflict probability that are caused by the random access procedure.

In a possible implementation, the SR configuration further includes a maximum number of SR transmission of the terminal device. The maximum number of SR transmission of the terminal device is used to indicate a total maximum number of times for which the terminal device transmits the SR.

In a possible implementation, if the number of SR transmission on the first SR resource reaches the first maximum number of SR transmission but does not reach the maximum number of SR transmission of the terminal device, when determining that in addition to the first numerology, the first LCH further corresponds to a second numerology, and a second SR resource indicated by a second SR parameter corresponding to the second numerology is available, the terminal device selects the second SR parameter configuration according to a preset policy, and transmits the SR on the second SR resource.

According to the method for transmitting a scheduling request provided in this application, in SR processes sequentially performed on various LCHs, after the SR fails to be transmitted on one LCH to request the uplink grant and a total number of SR transmission on the LCH reaches the maximum number of SR transmission of the terminal device, random access is initiated to request the uplink grant, to avoid continuously transmitting the SR request, and reduce a delay of requesting the uplink grant.

In a possible implementation, when the number of SR transmission from the terminal device on the first SR resource reaches the maximum number of SR transmission of the terminal device, the terminal device stops transmitting the SR on the first SR resource.

In a possible implementation, the SR configuration further includes a maximum number of SR transmission on a plurality of LCHs of the terminal device, and the maximum number of SR transmission on the LCH is used to indicate a total maximum number of times for which the SR is transmitted on the LCH.

In a possible implementation, a plurality of maximum number of SR transmission that correspond to the plurality of LCHs includes identifiers of the plurality of LCHs and the maximum number of SR transmission on each of the plurality of LCHs.

In a possible implementation, if a number of SR transmission on a first SR resource reaches a first maximum number of SR transmission but does not reach the maximum number of SR transmission on the first LCH, when determining that in addition to the first numerology, the first LCH further corresponds to a second numerology, and a second SR resource indicated by a second SR parameter corresponding to the second numerology is available, the terminal device selects the second SR parameter configuration according to a preset policy, and transmits the SR on the second SR resource.

According to the method for trasnsmitting a scheduling request provided in this application, in SR processes sequentially or simultaneously performed on various LCHs, after the SR fails to be transmitted on one LCH to request the uplink grant and a total number of SR transmission on the LCH reaches a maximum number of SR transmission on the LCH, random access is initiated to request the uplink grant, to avoid continuously transmitting the SR request, and reduce a delay of requesting the uplink grant.

In a possible implementation, when the number of SR transmission from the terminal device on the first SR resource reaches the maximum number of SR transmission on the LCH, the terminal device stops transmitting the SR on the first SR resource of the LCH.

In a possible implementation, the SR parameters corresponding to the plurality of numerologies include a default SR parameter corresponding to a default numerology.

In a possible implementation, the default SR parameter corresponding to the default numerology includes an identifier of the default numerology and a corresponding SR parameter.

In a possible implementation, when determining that a default SR resource indicated by the default SR parameter corresponding to the default numerology is available, the terminal device selects the default SR parameter, and transmits the SR on the default SR resource.

According to the method for transmitting a scheduling request provided in this application, the terminal device transmits the SR on an SR resource of the default numerology to request the uplink grant, thereby reducing complexity of an SR mechanism.

The preset policy includes: selecting, by the terminal device from an available SR resource, the first SR parameter corresponding to the earliest arrived first SR resource.

According to a second aspect, this application provides a method for transmitting a scheduling request. The method includes: generating, by an access network device, an SR configuration, where the SR configuration includes SR parameters corresponding to a plurality of wireless physical layer parameter numerologies; and sending, by the access network device, the SR configuration to the terminal device, where the SR configuration is used by the terminal device to transmit an SR.

In a possible implementation, the SR configuration further includes a maximum number of SR transmission of the terminal device. The maximum number of SR transmission of the terminal device is used to indicate a total maximum number of times for which the terminal device transmits the SR.

In a possible implementation, the SR configuration further includes a plurality of maximum number of SR transmission corresponding to a plurality of LCHs of the terminal device, and the maximum number of SR transmission on the LCH is used to indicate a total maximum number of times for which the SR is transmitted on the LCH.

In a possible implementation, the SR parameter includes a configuration of at least one of the following: an SR physical uplink control channel resource index, an SR configuration index, a maximum number of SR transmission, and an SR prohibit timer.

According to the method for transmitting a scheduling request provided in this application, the access network device can allocate different uplink resources to the terminal device based on SRs triggered by different services of the terminal device, to implement differentiated scheduling of different services.

According to a third aspect, this application provides a terminal device. The terminal device includes a processor and a transceiver, where the transceiver is communicatively coupled to the processor, and is configured to obtain an SR configuration sent by an access network device, where the SR configuration includes SR parameters corresponding to a plurality of numerologies; the processor is configured to select, based on the SR configuration, one SR parameter corresponding to a numerology, if there is to-be-sent uplink data on a first LCH of the terminal device; and the transceiver is further configured to transmit an SR to the access network device on an SR resource indicated by the SR parameter.

According to the terminal device provided in this application, the terminal device transmits the SR to the access network device based on a service of the to-be-sent uplink data by using a numerology and an SR configuration that correspond to the LCH on which the data is located. The access network device can identify scheduling requirements of different services, and rapidly and properly allocate uplink resources to different services, to implement differentiated scheduling of different services.

In a possible implementation, the SR configuration includes identifiers of a plurality of numerologies and an SR parameter corresponding to each of the plurality of numerologies.

In a possible implementation, the SR parameter includes a configuration of at least one of the following: an SR physical uplink control channel resource index, an SR configuration index, a maximum number of SR transmission, and an SR prohibit timer.

The processor is configured to: when determining that at least one numerology corresponding to the first LCH has an SR parameter, and an SR resource indicated by the SR parameter is available, select a first SR parameter according to a preset policy, where the first SR parameter corresponds to a first numerology; and the transceiver is configured to transmit the SR to the access network device on a first SR resource indicated by the first SR parameter.

According to the terminal device provided in this application, the terminal device transmits the SR to the access network device based on a service of the to-be-sent uplink data by using a numerology and an SR configuration that correspond to the LCH on which the data is located. The access network device can identify scheduling requirements of different services, and rapidly and properly allocate uplink resources to different services, to implement differentiated scheduling of different services.

In a possible implementation, when a number of SR transmission on the first SR resource reaches a first maximum number of SR transmission in the first SR parameter, the transceiver stops transmitting the SR on the first SR resource.

In a possible implementation, if a number of SR transmission on the first SR resource reaches the first maximum number of SR transmission, the processor is configured to: when determining that in addition to the first numerology, the first LCH further corresponds to a second numerology, and a second SR resource indicated by a second SR parameter corresponding to the second numerology is available, select the second SR parameter configuration according to a preset policy, and instruct the transceiver to transmit the SR on the second SR resource.

According to the terminal device provided in this application, after the terminal device fails, for a number of times, to request an uplink grant by transmitting the SR by using one proper numerology, the terminal device reselects another proper numerology to transmit the SR, to reduce an unnecessary random access procedure, and reduce a delay and a possible conflict probability that are caused by the random access procedure.

In a possible implementation, the SR configuration further includes a maximum number of SR transmission of the terminal device. The maximum number of SR transmission of the terminal device is used to indicate a total maximum number of times for which the terminal device transmits the SR.

In a possible implementation, if a number of SR transmission on the first SR resource reaches the first maximum number of SR transmission but does not reach the maximum number of SR transmission of the terminal device, the processor is configured to: when determining that in addition to the first numerology, the first LCH further corresponds to a second numerology, and a second SR resource indicated by a second SR parameter corresponding to the second numerology is available, select the second SR parameter configuration according to a preset policy, and instruct the transceiver to transmit the SR on the second SR resource.

According to the terminal device provided in this application, in SR processes sequentially performed on various LCHs, after the SR fails to be transmitted on one LCH to request the uplink grant and a total qnumber of SR transmission on the LCH reaches the maximum number of SR transmission of the terminal device, random access is initiated to request the uplink grant, to avoid continuously transmitting the SR request, and reduce a delay of requesting the uplink grant.

In a possible implementation, when a number of SR transmission from the transceiver on the first SR resource reaches the maximum number of SR transmission of the terminal device, the transceiver stops transmitting the SR on the first SR resource.

In a possible implementation, the SR configuration further includes a plurality of maximum number of SR transmission corresponding to a plurality of LCHs of the terminal device, and the maximum number of SR transmission on the LCH is used to indicate a total maximum number of SR transmission on the LCH.

In a possible implementation, a plurality of maximum number of SR transmission that correspond to the plurality of LCHs includes identifiers of the plurality of LCHs and the maximum number of SR transmission on each of the plurality of LCHs.

In a possible implementation, if a number of SR transmission on a first SR resource reaches a first maximum number of SR transmission but does not reach the maximum number of times for which the SR is transmitted on the first LCH, the processor is configured to: when determining that in addition to the first numerology, the first LCH further corresponds to a second numerology, and a second SR resource indicated by a second SR parameter corresponding to the second numerology is available, select the second SR parameter configuration according to a preset policy, and instruct the transceiver to transmit the SR on the second SR resource.

According to the terminal device provided in this application, in SR processes sequentially or simultaneously performed on various LCHs, after the SR fails to be transmitted on one LCH to request the uplink grant and a total number of SR transmission on the LCH reaches a maximum number of SR transmission on the LCH, random access is initiated to request the uplink grant, to avoid continuously transmitting the SR request, and reduce a delay of requesting the uplink grant.

In a possible implementation, when the number of SR transmission from the transceiver on the first SR resource reaches the maximum number of SR transmission on the LCH, the transceiver stops transmitting the SR on the first SR resource of the LCH.

In a possible implementation, the SR parameters that are obtained by the transceiver and that correspond to the plurality of numerologies include an identifier of a default numerology and a default SR parameter corresponding to the default numerology.

In a possible implementation, the default SR parameter corresponding to the default numerology includes an identifier of the default numerology and a corresponding SR parameter.

In a possible implementation, the processor is configured to: when determining that a default SR resource indicated by the default SR parameter corresponding to the default numerology is available, select the default SR parameter, and instruct the transceiver to transmit the SR on the default SR resource.

According to the terminal device provided in this application, the terminal device transmits the SR on an SR resource of the default numerology to request the uplink grant, thereby reducing complexity of an SR mechanism.

The preset policy includes: selecting, by the terminal device from an available SR resource, the first SR parameter corresponding to the earliest arrived first SR resource.

According to a fourth aspect, this application provides an access network device. The access network device includes a processor and a transceiver, where the processor is configured to generate an SR configuration, where the SR configuration includes SR parameters corresponding to a plurality of wireless physical layer parameter numerologies; and the transceiver is communicatively coupled to the processor, and is configured to send the SR configuration to the terminal device, where the SR configuration is used by the terminal device to transmit an SR.

In a possible implementation, the SR configuration includes a maximum number of SR transmission of the terminal device. The maximum number of SR transmission of the terminal device is used to indicate a total maximum number of times for which the terminal device transmits the SR.

In a possible implementation, the SR configuration includes a pluratlity of maximum number of SR transmission corresponding to a plurality of LCHs of the terminal device, and the maximum number of SR transmission on the LCH is used to indicate a total maximum number of times for which the SR is transmitted on the LCH.

In a possible implementation, the SR parameter includes a configuration of at least one of the following: an SR physical uplink control channel resource index, an SR configuration index, a maximum number of SR transmission, and an SR prohibit timer.

According to the access network device provided in this application, the access network device can allocate different uplink resources to the terminal device based on SRs triggered by different services of the terminal device, to implement differentiated scheduling of different services.

According to a fifth aspect, a communications apparatus is provided. The communications apparatus is configured to perform the method according to any one of the first and the second aspects or the possible implementations of the first and the second aspects. Specifically, the communications apparatus may include units configured to perform the method according to any one of the first and the second aspects or the possible implementations of the first and the second aspects.

According to a sixth aspect, a communications apparatus is provided, including a memory and a processor. The memory is configured to store a computer program. The processor is configured to invoke the computer program from the memory and run the computer program, so that the communications apparatus performs the method according to any one of the first and the second aspects or the possible implementations of the first and the third aspects.

According to a seventh aspect, a computer program product is provided. The computer program product includes computer program code. When the computer program code is run by a communications unit, a processing unit, a transceiver, or a processor of a communications device (for example, a network device or a network management device), the communications device is enabled to perform the method according to any one of the first and the second aspects or the possible implementations of the first and the second aspects.

According to an eighth aspect, a computer-readable storage medium is provided. The computer-readable storage medium stores a program, and the program enables user equipment to perform the method according to the first aspect or the possible implementations of the first aspect.

These aspects or another aspect of the present invention may be clearer and more intelligible in descriptions in the following (plurality of) embodiments.

### BRIEF DESCRIPTION OF DRAWINGS

The following briefly describes the accompanying drawings used in the descriptions of the embodiments of this application or the prior art.
FIG. 1 is a schematic structural diagram of a communications system according to this application;
FIG. 2 is a schematic flowchart of a method for transmitting an SR according to this application;
FIG. 3 is a schematic diagram of correspondences between LCHs, numerologies, and SR parameters according to this application:
FIG. 4 is a schematic flowchart of another method for transmitting an SR according to this application;
FIG. 5 is a schematic flowchart of still another method for transmittingan SR according to this application;
FIG. 6A and FIG. 6B are a schematic flowchart of yet another method for transmitting an SR according to this application;
FIG. 7A and FIG. 7B are a schematic flowchart of yet another method for transmitting an SR according to this application;
FIG. 8 is a schematic flowchart of yet another method for transmitting an SR according to this application;
FIG. 9 is a schematic flowchart of yet another method for transmitting an SR according to this application;
FIG. 10 is a schematic block diagram of a terminal device according to this application;
FIG. 11 is another schematic block diagram of a terminal device according to this application;
FIG. 12 is a schematic block diagram of an access network device according to this application; and
FIG. 13 is another schematic block diagram of an access network device according to this application.

### DESCRIPTION OF EMBODIMENTS

The following describes the embodiments of this application with reference to the accompanying drawings in the embodiments of this application.

In this application, the word "example" is used to represent giving an example, an illustration, or a description. Any embodiment described as an "example" in this application should not be explained as being more preferred or having more advantages than another embodiment. To enable any person skilled in the art to implement and use the present invention, the following description is given. In the following description, details are set forth for the purpose of explanation. It should be understood by a person of ordinary skill in the art that the present invention can be implemented without using these specific details. In other examples, well-known structures and processes are not described in detail to avoid obscuring the description of the present invention with unnecessary details. Therefore, the present invention is not limited to the embodiments described but extends to the widest scope that complies with the principles and features disclosed in this specification.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of this application described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Specific embodiments are used below to describe in detail the technical solutions of the present invention. The following several specific embodiments may be combined with each other, and a same or similar concept or process may not be described repeatedly in some embodiments.

In an LTE system, an SR configuration is based on a terminal device. To be specific, one terminal device has only one SR configuration, and when the terminal device needs to send uplink data of various services, the terminal device sends an uplink resource scheduling request based on the SR configuration. With rapid development of wireless communications technologies, a 5th generation (5th Generation, 5G) wireless communications technology has become a popular subject in the industry currently. 5G supports a variety of application requirements, for example, supports an access capability characterized by higher-rate experience and higher bandwidth, information exchange characterized by lower latency and high reliability, and larger-scale and low-cost access and management of machine type communications devices. 5G needs to support a plurality of application scenarios, including enhance mobile broadband (enhanced mobile broadband, eMBB) communication, such as video communication and multimedia transmission; ultra-reliable low-latency communication (ultra reliable and low latency communication, URLLC), such as unmanned driving and telemedicine; massive machine type communication (massive machine type communication, mMTC), such as wireless meter reading and warehousing management; and time-sensitive networking (time-sensitive networking, TSN) communication, such as machine job control. Service requirements in different scenarios vary greatly. For example, an eMBB service requires very high bandwidth, a URLLC service requires very short latency, and an mMTC service requires wide coverage. One terminal device may support communication services in a plurality of scenarios, for example, may support both eMBB and URLLC communication. Because a requirement of the URLLC service on latency is far higher than that of the eMBB service, the URLLC service needs an opportunity of faster uplink scheduling, for example, more SR resources or a shorter SR transmission period, to transmit uplink data of the URLLC service. It is found that, if one terminal device has only one SR configuration, differentiated requirements when services in a plurality of scenarios coexist cannot be met. In this scenario, currently, there is no proper solution to how to effectively provide differentiated SR mechanisms for the terminal device. Therefore, the embodiments of this application provide a technical solution to how to transmit a scheduling request when a plurality of services coexist.

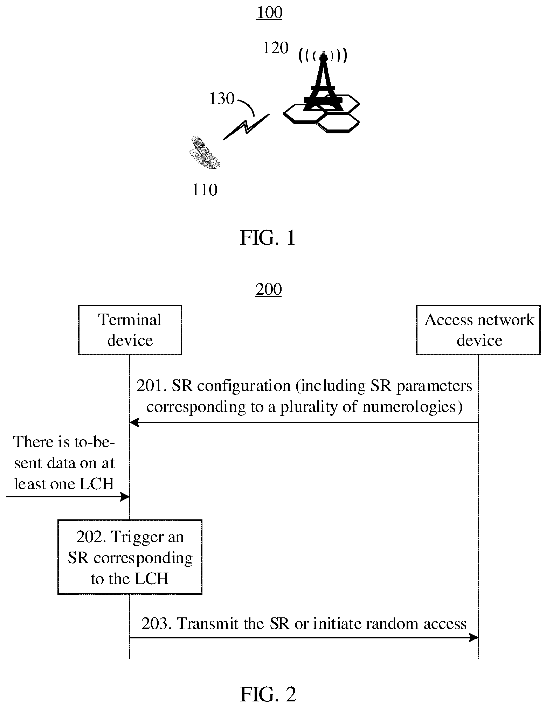

A method for transmitting a scheduling request and an apparatus that are provided in the embodiments of this application are applicable to a scenario in which an access network device performs an SR configuration for a terminal device served by the access network device and how the terminal device performs an SR on an SR resource indicated by the SR configuration. FIG. 1 is a schematic structural diagram of a communications system according to an embodiment of this application. The communications system 100 includes a terminal device 110 and an access network device 120. Terminal device 110 communicates with the access network device 120 over a link 130. It should be understood that this is merely an example. In an actual system, one access network device 120 may communicate with a plurality of terminal devices 110, and quantities of terminal devices 110 and access network devices 120 are not limited to examples in this application. In addition, the communications system may further include another device. Optionally, a device in the communications system may perform communication by using a wireless communications technology, for example, long term evolution (Long Term Evolution, LTE), an LTE frequency division duplex (frequency division duplex, FDD) technology, an LTE time division duplex (time division duplex, TDD) technology, a wireless fidelity (wireless-fidelity, WI-FI) system, and a 5G new radio (new radio, NR) communications technology. The technical solutions in the embodiments of the present invention are described in this specification by using a 5G communications technology as an example. It should be understood that the technical solutions in the embodiments of the present invention are not only applicable to the 5G communications technology, but also applicable to another system that is based on a foregoing communications technology, provided that the access network device needs to allocate an uplink resource used by the terminal device to send uplink data, and the access network device has a capability of distinguishing between scheduling requirements of different services of the terminal device.

In an actual system, the access network device may be an access point (access point, AP) in a wireless local area network (Wireless Local Area Networks, WLAN), an evolved NodeB (evolved NodeB, eNB, or eNodeB) in LTE, a relay station or an access point, a vehicle-mounted device, a wearable device, a network device in a 5G network, or an access network device in a future evolved PLMN network. For example, the access network device may be a base station in 5G (for example, a next-generation NodeB (next-generation NodeB, gNB) or a next-generation radio (next-generation radio, NR) node), a transmission and reception point (transmission and reception point, TRP), a centralized unit (centralized unit, CU), a distributed unit (distributed unit, DU), or the like. It should be understood that the terminal device communicates with the access network device by using a transmission resource (for example, a frequency domain resource or a spectrum resource) used by a cell managed by the access network device. The cell may belong to a macro cell (macro cell), a hyper cell (hyper cell), or a small cell (small cell). The small cell herein may include a metro cell (metro cell), a micro cell (micro cell), a pico cell (pico cell), a femto cell (femto cell), and the like. These small cells have characteristics of a small coverage and low transmit power and are applicable to providing a high-rate data transmission service.

The terminal device may also be referred to as user equipment (user equipment, UE) , an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a station (station, ST) in a WLAN, a cellular phone, a cordless phone, a session initiation protocol (Session Initiation Protocol, SIP) phone, a wireless local loop (Wireless Local Loop, WLL) station, a personal digital assistant (personal digital assistant, PDA) device, a handheld device with a wireless communication function, a relay device, a computing device or another processing device coupled to a wireless modem, a vehicle-mounted device, a wearable device, or a next generation communications system, such as a terminal device in a 5G network or a terminal device in a future evolved public land mobile network (public land mobile network, PLMN). As an example instead of a limitation, in the embodiments of this application, the terminal device may alternatively be a wearable device. A wearable device may also be referred to as a wearable intelligent device, and is a general term for wearable devices such as glasses, gloves, watches, clothes, and shoes that are developed by applying wearable technologies in intelligent designs of daily wear. A wearable device is a portable device that can be directly worn on a body or integrated into clothes or an accessory of a user. A wearable device is not merely a hardware device, but is used to implement a powerful function through software support, data interaction, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

In the LTE system, an SR mechanism is a mechanism in which a terminal device requests an uplink grant from an access network device, to allocate an uplink resource for uplink data transmission. It should be noted that the SR mechanism is applicable to an uplink grant request when new data needs to be sent by the terminal device, and is not applicable to a case in which uplink data to be sent by the terminal device is to-be-retransmitted data. According to the description of the 3GPP technical specification TS36.321 v14.0.0, a base station sends a MAC configuration of the terminal device to the terminal device by using radio resource control (radio resource control, RRC) signaling. The MAC configuration includes an SR configuration. The SR configuration mainly includes settings of the following SR parameters: an SR physical uplink control channel resource index sr-PUCCH-ResourceIndex, used to indicate a time-frequency resource location of a PUCCH used by the terminal device to transmit the SR; an SR configuration index sr-ConfigIndex, used to indicate a time period for transmitting an SR by the terminal device; a maximum number of SR transmission, dsr-TransMax, used to configure a maximum number of times for which the terminal device transmits the SR in an SR process; and an SR prohibit timer sr-ProhibitTimer, which is a prohibit timer used to limit transmission of the SR. For a terminal device in a connected mode, when there is to-be-sent uplink data, if there is no uplink grant but there is an SR resource that can be used to transmit an SR (in other words, the terminal device has not transmitted the SR on an SR resource of a PUCCH indicated by an SR configuration of the terminal device), the terminal device first transmits the SR to a base station on the SR resource that is of the PUCCH and that is indicated by the sr-PUCCH-ResourceIndex, to request a small quantity of uplink resources. After the base station successfully obtains an SR signal of the terminal device through decoding, if there is an available resource, the base station may allocate an uplink resource to the terminal device, and send an uplink grant to the terminal device, to indicate the uplink resource used to send the uplink data. In some cases, although the terminal device transmits the SR, the base station does not obtain the SR through decoding. In some other cases, even if the base station correctly decodes the SR, the base station cannot allocate an uplink resource in time. Therefore, in many cases, to obtain the uplink grant, the terminal device needs to transmit the SR for a number of times. Specifically, the terminal device periodically transmits the SR to the base station based on the SR period configured by the sr-ConfigIndex. An SR transmission period is usually very short. Therefore, to avoid that UE excessively frequently transmits the SR, the prohibit timer sr-ProhibitTimer configured by the base station for the terminal device is started after the terminal device finishes transmittingthe SR once, to prohibit the terminal device from transmittingthe SR in a period of time, and is stopped after the prohibit timer expires. When the prohibit timer is running, the terminal device cannot transmitthe SR, and the terminal device can continue to transmitthe SR only when the prohibit timer expires. If the terminal device has not received the uplink grant sent by the base station until a maximum number of SR transmission, dsr-TransMax, is reached, the terminal device stops transmittingthe SR, and releases an SR resource. Instead, the terminal device obtains an uplink scheduling opportunity by using a random access process.

There are a wide variety of 5G services, and different services have different scheduling requirements. An SR mechanism that is based on a terminal device in an LTE system cannot meet differentiated service requirements, and an SR mechanism with a finer granularity needs to be designed in a 5G system, so that the access network device can identify scheduling requirements of different services, and quickly and properly allocate uplink resources to different services. In the 5G system, the terminal device and the access network device may communicate with each other to provide different types of communication services based on different radio physical layer parameters (Numerologies). The numerologies may include at least one of the following parameters: a transmission time interval (Transmission Time Interval, TTI) length (for example, 1 ms TTI, 0.5 ms TTI, a TTI length of an orthogonal frequency division modulation (orthogonal frequency division modulation, OFDM) symbol, or a TTI length of two OFDM symbols), a subcarrier spacing (for example, 15 kHz or 60 kHz), a cyclic prefix (Cyclic Prefix, CP) length (for example, 4.7 µs or 16.7 µs), a resource period (where, for example, a period is 1 ms, 2 ms, 5 ms, one TTI length, or two TTI lengths), a coding scheme (for example, turbo code, low-density parity-check (Low-Density Parity-Check, LDPC) code, or polar code), or a multiple access scheme (for example, OFDM or CDMA), a quantity of subcarriers (for example, 12 subcarriers or 15 subcarriers) occupied by one resource block in frequency domain, whether to perform repeated frequency-domain transmission (where, if frequency-domain retransmission is performed, a number of times for which frequency-domain retransmission is performed is further included), and whether to perform time-domain retransmission (where, if time-domain retransmission is performed, a number of times for which time-domain retransmission is performed is further included). For example, MBB service data may be transmitted on a numerology resource with a relatively long TTI, and URLLC service data may be transmitted on another numerology resource with a relatively short TTI, to ensure QoS of different types of communication services. Therefore, types of uplink resources required when the terminal device sends different service data are different. In view of this, in this embodiment of this application, the foregoing objective is achieved by designing a numerology-based SR configuration.

This specification specifically provides the following several embodiments. The following describes in detail the technical solutions of this application with reference to FIG. 2 to FIG. 9 by using specific method embodiments. The following several specific embodiments may be combined with each other, and a same or similar concept or process may not be described repeatedly in some embodiments. It should be understood that FIG. 2 to FIG. 9 are schematic flowcharts of the communication method according to the embodiments of this application, and show detailed communication steps or operations of the method. However, these steps or operations are only examples. Alternatively, in the embodiments of this application, another operation or variations of the operations in FIG. 2 to FIG. 9 may be performed. In addition, the steps in FIG. 2 to FIG. 9 may be performed in a sequence different from the sequences shown in FIG. 2 to FIG. 9, and it is like that not all the operations in FIG. 2 to FIG. 9 need to be performed.

FIG. 2 is a schematic flowchart of a method for transmitting an SR according to this application. The method 200 may be applied to a scenario, shown in FIG. 1, in which an uplink grant is obtained when a terminal device 110 transmits uplink data to an access network device 120. The procedure shown in FIG. 2 includes the following steps.

201. The access network device sends an SR configuration to the terminal device.

Optionally, after receiving the SR configuration sent by the access network device, the terminal device may store the SR configuration in an internal memory, and may directly obtain the SR configuration from the memory when uplink data needs to be sent subsequently.

The SR configuration may include SR parameters corresponding to a plurality of numerologies. For example, the SR parameters may include at least one of the following parameters: sr-PUCCH-ResourceIndex, sr-ConfigIndex, dsr-TransMax, and sr-ProhibitTimer.

Optionally, the SR configuration may further include one or more numerology identifiers, and the numerology identifiers respectively correspond to the SR parameters of the numerologies. It should be understood that the numerology identifier is an identifier used to identify a numerology. The identifier may have a plurality of forms, for example, may be in a form of a number, a form of a character, or a form of a combination of a number and a character. This is not limited in this application.

Optionally, the access network device further identifies different numerologies by using numerology indexes (index). For example, an index number corresponding to a numerology used for the eMBB service is a binary value "01", and an index number corresponding to a numerology used for the mMTC service is a binary value "10".

For example, the SR configuration may be in a form shown in Table 1. The SR is configured with SR parameters of two numerologies (respectively corresponding to NumerologyID1 and NumerologyID2). For a value range of each parameter, refer to descriptions in TS36.321 v14.0.0. It should be understood that SR parameters of a numerology shown in Table 1 is merely an example. In actual application, SR parameters configured for a numerology may include some parameters in Table 1, or may include another SR parameter. In addition, setting of an SR parameter may not be limited to the value range described in TS36.322 v14.0.0.

**Table 1 SR configuration in which each numerology has respective SR parameters**

| |
|---|
| > NumerologyID1 |
| >> sr-PUCCH-ResourceIndex1 |
| >> sr-ConfigIndex1 |
| >> dsr-TransMax1 |
| >> sr-ProhibitTimer1 |
| > NumerologyID2 |
| >> sr-PUCCH-ResourceIndex2 |
| >> sr-ConfigIndex2 |
| >> dsr-TransMax2 |
| >> sr-ProhibitTimer2 |

The access network device may send the SR configuration to the terminal device by using radio resource control (Radio Resource Control, RRC) signaling, MAC control information, or the like. The access network device may directly send the SR configuration to the terminal device, or may add the SR configuration to a MAC configuration, and send the MAC configuration to the terminal device.

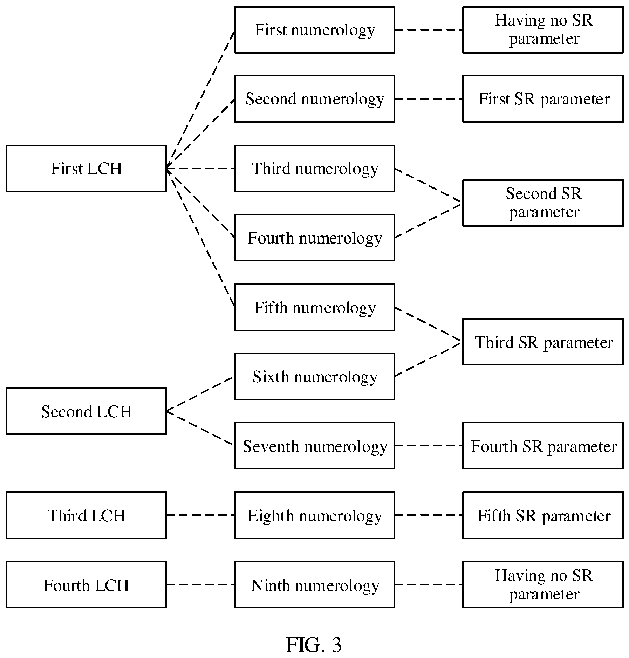

Further, FIG. 3 is a schematic diagram of a correspondence between numerologies and SR parameters and a correspondence between logical channels (logical channel, LCH) and numerologies in an SR configuration according to this application. As shown in FIG. 3, one LCH may correspond to one or more numerologies, one numerology may correspond to one set of SR parameters, and a plurality of numerologies may further correspond to a same set of SR parameters. For example, the first LCH may correspond to five numerologies: the first numerology to the fifth numerology. The access network device may not configure an SR parameter for the first numerology, in other words, the first numerology has no corresponding SR parameter, and therefore, has no corresponding SR resource. The second numerology has a corresponding set of first SR parameters. The third numerology and the fourth numerology share a same set of second SR parameters, in other words, the third numerology and the fourth numerology share a same SR resource. The fifth numerology and the sixth numerology that corresponds to the second LCH share one set of third SR parameters. For example, for a numerology without an SR parameter, the access network device may not include information about the numerology in the SR configuration shown in Table 1. When a plurality of numerologies share one set of SR parameters, in the SR configuration, the access network device may use a form in which SR parameters with a same value are separately set for the numerologies, or may use a form in which a plurality of numerology identifiers or indexes correspond to one set of SR parameters. For example, Table 2 shows an SR configuration form in which a plurality of numerologies share one set of SR parameters. "NumerologyList" includes identifiers, indexes, or the like of the plurality of numerologies that share the SR parameters.

**Table 2 SR configuration in which a plurality of numerologies share SR parameters**

| |
|---|
| > NumerologyList |
| >> sr-PUCCH-ResourceIndex |
| >> sr-ConfigIndex |
| >> dsr-TransMax |
| >> sr-ProhibitTimer |

It should be noted that a quantity of LCHs, a quantity of numerologies, and a quantity of SR parameters and correspondences between the LCHs, the numerologies, and the SR parameters in FIG. 3 are merely examples. This application is not limited thereto. The correspondence between LCHs and numerologies may be configured by the access network device, or negotiated between the access network device and the terminal device, or determined, when an LCH is established, in another manner specified in a protocol, and the correspondence may be included in the MAC configuration and sent by the access network device to the terminal device. Alternatively, the correspondence may be sent to the terminal device in another manner, for example, by using RRC signaling or MAC control information. This is not limited in this application.

202. The terminal device triggers an SR corresponding to an LCH.

When uplink data needs to be sent on an LCH of the terminal device, an SR corresponding to the LCH is triggered. Optionally, before triggering the SR corresponding to the LCH, the terminal device may further first trigger a BSR (for example, a regular (regular) BSR), and trigger the SR when the SR can be triggered (for example, when corresponding sr-ProhibitTimer is not running).

Optionally, when uplink data needs to be sent on a plurality of LCHs of the terminal device, the terminal device triggers an SR of each LCH.

203. The terminal device transmits the SR to the access network device or initiates random access.

In this step, the terminal device finds, based on the SR configuration obtained in step 201 and the pre-learned correspondence between LCHs and numerologies, an SR parameter corresponding to the LCH on which uplink data needs to be sent, and transmits the SR to the access network device on an SR resource indicated by the SR parameter. Optionally, after receiving the SR configuration sent by the access network device in step 201, the terminal device may store the SR configuration in an internal memory, and may directly obtain the SR configuration from the memory when uplink data needs to be sent subsequently. Alternatively, if the terminal device cannot find, in the SR configuration, an SR parameter corresponding to the LCH on which uplink data needs to be sent, or if an SR resource of the LCH is used, the terminal device initiates random access to request an uplink grant.

When a plurality of LCHs of the terminal device trigger respective SRs, in an example, the LCHs sequentially transmitthe SR according to a preset rule, that is, the SR processes are executed in sequence. The preset rule may be priorities of LCHs, a time sequence of SR resources of LCHs, sizes of SR resources of LCHs, or the like. This is not limited in this application. In another example, each LCH may further independently transmitan SR, that is, all SR processes are performed in parallel. It should be noted that, when there is to-be-sent uplink data on an LCH and the SR is triggered, in this specification, a description of transmiting the SR by the terminal device or a description of transmiting the SR on the LCH of the terminal device corresponds to a same meaning.

In a 5G communications system, the terminal device has a plurality of LCHs, each LCH may correspond to a different numerology, and different service types may use different numerologies. Therefore, different services may be scheduled based on a numerology granularity. According to the foregoing steps in this application, the terminal device transmits the SR to the access network device based on a service of the to-be-sent uplink data by using a numerology and an SR configuration that correspond to the LCH on which the data is located. The access network device can identify scheduling requirements of different services, and rapidly and properly allocate uplink resources to different services, to implement differentiated scheduling of different services.

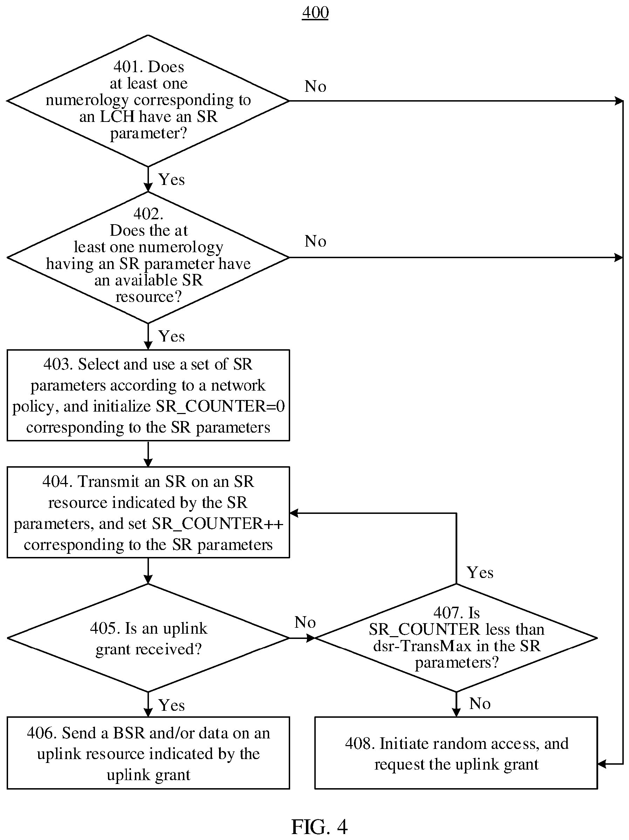

After receiving the SR configuration sent by the access network device, specifically, the terminal device may use the following methods in FIG. 4 to FIG. 8.

FIG. 4 is a schematic flowchart of a method for transmitting an SR according to an embodiment of this application. The method 400 may be applied to the scenario, in FIG. 1, in which the uplink grant is requested after the terminal device 110 receives the SR configuration sent by the access network device 120 and when there is to-be-sent uplink data on an LCH. The method procedure shown in FIG. 4 may be performed by the terminal device 110 in FIG. 1. The method includes but is not limited to the following steps.

401. The terminal device determines whether at least one numerology corresponding to the LCH has an SR parameter.

In this step, the terminal device determines, with reference to the pre-learned correspondence between LCHs and numerologies, based on the SR configuration obtained from step 201 in the foregoing, whether one or more numerologies corresponding to the LCH on which uplink data needs to be sent have SR parameters, that is, whether the access network device has set, in the SR configuration, corresponding SR parameters for the one or more numerologies. Specifically, if none of the numerologies corresponding to the LCH has an SR parameter, step 408 is performed; otherwise, step 402 is performed.

402. The terminal device further determines whether the at least one numerology having the SR parameter has an available SR resource.

For the numerology has an SR parameter, if an SR resource indicated by the SR parameter is not used, the SR resource is an available SR resource. For example, as shown in FIG. 3, a fifth numerology and a sixth numerology share one set of third SR parameters, in other words, have same SR parameters. If the SR is transmittedon an SR resource, corresponding to the sixth numerology, on a second LCH, the SR resource indicated by the third SR parameter is used. In this case, an SR resource corresponding to the fifth numerology becomes unavailable because the SR resource is occupied by the second LCH to transmitthe SR, and a first LCH cannot transmitthe SR on the SR resource corresponding to the fifth numerology.

Specifically, if none of the numerologies that correspond to the LCH and that have an SR parameter has an available SR resource, step 408 is performed; otherwise, step 403 is performed.

403. The terminal device selects and uses a set of SR parameters according to a preset policy, and initializes a counter corresponding to the SR parameters, that is, SR_COUNTER=0.

SR_COUNTER is a counter independently maintained by the terminal device for dsr-TransMax in each set of SR parameters, and one SR_COUNTER is used to count a number of SR transmission from the terminal device by using one set of SR parameters. Generally, before transmitting the SR by using a set of SR parameters, the terminal device initializes SR_COUNTER corresponding to the SR parameters to 0. Each time after the terminal device transmits the SR, a value of SR_COUNTER increases by 1 until the value of SR_COUNTER reaches a value of dsr-TransMax set in the SR parameters, indicating that the terminal device fails to request the uplink grant. Optionally, after the terminal device fails to transmitthe SR to request the uplink grant, the terminal device stops transmitting the SR, and then initiates random access to re-request the uplink grant.

After steps 401 and 402, an LCH on which uplink data needs to be sent may have one or more numerologies that have SR parameters and that have an SR resource. These numerologies are referred to as an available numerology set. In this step, the terminal device may select, from the available numerology set according to the preset policy, an SR resource indicated by one SR parameter corresponding to the numerologies, to transmitthe SR to the access network device. It should be noted that the preset policy may be configured by the access network device, negotiated between the access network device and the terminal device, or determined in another manner specified in a protocol. The preset policy may be included in a MAC configuration and sent by the access network device to the terminal device, or may be sent to the terminal device in another manner, for example, by using RRC signaling or MAC control information. This is not limited in this application. The preset policy may include any one of the following manners:
(1) Select a numerology based on priorities, and transmitthe SR on an SR resource corresponding to the numerology.

In this policy, a plurality of numerologies supported by the terminal device have a priority sequence. For example, a priority of a first numerology used for a URLLC service is higher than a priority of a second numerology used for an eMBB service. In this case, if one LCH has to-be-sent uplink data of the eMBB service and an SR resource corresponding to the second numerology has been used, when an SR resource corresponding to the first numerology is available, the SR resource corresponding to the first numerology may be selected to transmit the SR. On the contrary, because a priority of the second numerology is lower than that of the first numerology, when uplink data of the URLLC service needs to be sent, the SR cannot be transmitted on the SR resource corresponding to the second numerology.

(2) According to the present invention, transmit an SR on an SR resource whose arrival time is the earliest in available SR resources.

Different SR parameters (for example, different values of sr-PUCCH-ResourceIndex and different values of sr-ConfigIndex) may correspond to different SR resources in time domain. In other words, at a current moment, SR resources corresponding to different SR parameters are different in time. In this policy, the terminal device selects, from the available SR resources, an SR resource closest to a current moment to transmit the SR.

(3) Randomly select an SR resource corresponding to a numerology to transmit an SR.

In this policy, the terminal device randomly selects, from a plurality of available SR resources, one SR resource to transmit the SR.

(4) Select, in a pre-configuration manner, one SR resource corresponding to the numerology to transmit the SR.

In the policy, the terminal device transmits the SR on the SR resource corresponding to the pre-configured specified numerology. For example, for the example in FIG. 3, it may be pre-configured that the first LCH selects the second numerology from the first numerology to the fifth numerology as a preferential numerology. Particularly, when one LCH corresponds to only one numerology, for example, the third LCH and the eighth numerology in FIG. 3, the pre-configured specified numerology is the eighth numerology.

404. The terminal device transmits the SR on the SR resource indicated by the selected SR parameters, and increases a value of SR_COUNTER corresponding to the SR parameters by 1.

An SR resource indicated by a set of SR parameters periodically appears on an uplink control channel resource. In this step, the terminal device transmits the SR on an SR resource, closest to a current TTI, in SR resources indicated by the selected SR parameters, and increases the value of corresponding SR_COUNTER by 1. In addition, after transmitting the SR, the terminal device starts sr-ProhibitTimer in the SR parameters, and does not transmit the SR before sr-ProhibitTimer expires.

405. The terminal device determines whether the uplink grant is received.

In this step, the terminal device determines, based on received information in a downlink control channel, whether the access network device has allocated an uplink resource to an LCH that is of the terminal device and on which uplink data needs to be sent. Specifically, if the uplink grant sent by the access network device is received on the downlink control channel, step 406 is performed; otherwise, step 407 is performed.

406. The terminal device transmits a BSR and/or uplink data on an uplink resource indicated by the uplink grant.

In this step, after receiving the uplink grant sent by the access network device, the terminal device sends proper data to the access network device based on a size of the uplink resource indicated by the uplink grant. In an example, when the uplink resource indicated by the uplink grant is very limited, the terminal device sends a BSR on the uplink resource. The BSR indicates a data volume of to-be-sent uplink data. In another example, when the uplink resource indicated by the uplink grant is sufficient to accommodate the to-be-sent uplink data of the terminal device, the terminal device directly sends the to-be-sent uplink data on the uplink resource. In still another example, when the uplink resource indicated by the uplink grant is insufficient to accommodate all to-be-sent uplink data of the terminal device, the terminal device may further send, on the uplink resource, some to-be-sent uplink data and a BSR that indicates a data volume of remaining to-be-sent uplink data.

407. The terminal device determines whether SR_COUNTER is less than dsr-TransMax in the SR parameters.

Step 405 indicates that the terminal device has not received, after previously transmiting the SR, the uplink grant sent by the access network device. In this step, the terminal device determines whether SR_COUNTER has not reached a maximum number of transmission times dsr-TransMax in the SR parameters. Specifically, if SR_COUNTER has reached the maximum number of transmission times dsr-TransMax in the SR parameters, step 404 is performed; or if SR_COUNTER has not reached the maximum quantity of transmission times dsr-TransMax in the SR parameters, step 408 is performed.

408. The terminal device initiates random access, to request the uplink grant.

In this step, the terminal device stops transmiting the SR, releases all SR resources of the LCH, and initiates random access to the access network device, to request the uplink grant.

It should be understood that, when a plurality of LCHs of the terminal device each have to-be-sent uplink data, the terminal device may perform steps 401 to 408 for each LCH. In an example in which SR processes are executed in series, the terminal device sequentially performs the steps shown in FIG. 4 for each LCH. In an example in which SR processes are performed in parallel, the terminal device may simultaneously perform the steps shown in FIG. 4 for each LCH. It should be noted that, after a plurality of LCHs fail to request the uplink grant, the terminal device may initiate random access for the plurality of LCHs on a same random access resource, to request a corresponding uplink grant; or may initiate random access for the plurality of LCHs on different random access resources based on different LCHs, to request a corresponding uplink grant.

According to the foregoing steps in this application, the terminal device selects, according to a preset policy for to-be-sent uplink data of different services, proper numerologies and corresponding SR resources to transmit the SR to the access network device, so that the terminal device can use different SR parameters based on different services, to request uplink grants, to implement differentiated scheduling of different services.

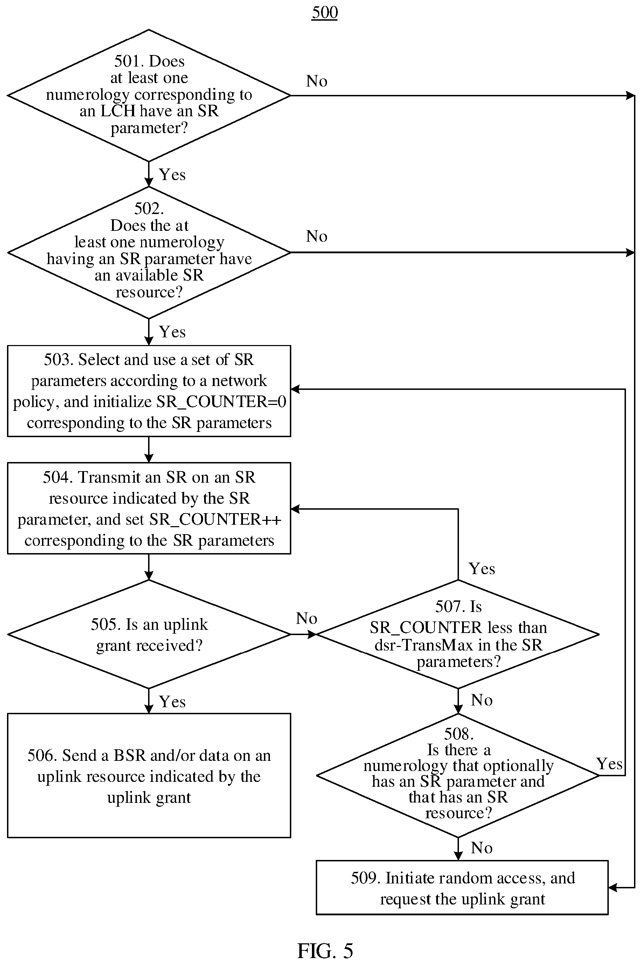

FIG. 5 is a schematic flowchart of another method for transmitting an SR according to this application. The method 500 may be applied to the scenario, in FIG. 1, in which the uplink grant is requested after the terminal device 110 receives the SR configuration sent by the access network device 120 and when there is to-be-sent uplink data on an LCH. In the method example in FIG. 5, if one LCH may correspond to a plurality of numerologies, when one numerology has no SR parameter or no available SR resource, an SR resource of another numerology may be used to request the uplink grant. The method procedure shown in FIG. 5 may be performed by the terminal device 110 in FIG. 1. The method includes but is not limited to the following steps.

501. The terminal device determines whether at least one numerology corresponding to the LCH has an SR parameter.

502. The terminal device further determines whether the at least one numerology having the SR parameter has an available SR resource.

503. The terminal device selects and uses a set of SR parameters according to a preset policy, and initializes a counter corresponding to the SR parameters, that is, SR_COUNTER=0.

504. The terminal device transmits the SR on the SR resource indicated by the selected SR parameters, and increases a value of SR_COUNTER corresponding to the SR parameters by 1.

505. The terminal device determines whether the uplink grant is received.

506. The terminal device sends a BSR and/or data on an uplink resource indicated by the uplink grant.

Steps 501 to 506 are similar to steps 401 to 406 in the foregoing, and details are not described herein again.

507. The terminal device determines whether SR_COUNTER is less than dsr-TransMax in the SR parameters.

Step 505 indicates that the terminal device has not received, after previously transmitting the SR, the uplink grant sent by the access network device. In this step, the terminal device determines whether SR_COUNTER has not reached a maximum number of transmission times dsr-TransMax in the SR parameters. Specifically, if SR_COUNTER has reached the maximum number of transmission times dsr-TransMax in the SR parameters, step 504 is performed; or if SR_COUNTER has not reached the maximum number of transmission times dsr-TransMax in the SR parameters, step 508 is performed.

508. The terminal device determines whether there is a numerology that optionally has an SR parameter and that has an SR resource.

Step 507 indicates that the terminal device previously selects, according to the preset policy, a numerology and an SR parameter configured for the numerology to transmit the SR, and has not obtained the uplink grant. In this step, the terminal device deletes, from an available numerology set, the numerology corresponding to the used SR resource, and determines whether an updated numerology set is empty. If the updated numerology set is not empty, step 503 is performed; or if the updated numerology set is empty, step 509 is performed.

It should be understood that, a procedure in which the terminal device cyclically performs steps 503 to 508 is equivalent to that the terminal device sequentially selects, according to the preset policy, a proper numerology from the available numerology set corresponding to the LCH on which uplink data needs to be sent, and transmits the SR on a corresponding SR resource.

509. The terminal device initiates random access, to request the uplink grant.

In this step, the terminal device stops transmiting the SR, releases all SR resources that are of the LCH and that correspond to the SR parameters, and initiates random access to the access network device, to request the uplink grant.

It should be understood that, when a plurality of LCHs of the terminal device each have to-be-sent uplink data, the terminal device may perform steps 501 to 509 for each LCH. In an example in which SR processes are executed in series, the terminal device sequentially performs the steps shown in FIG. 5 for each LCH. In an example in which SR processes are performed in parallel, the terminal device may simultaneously perform the steps shown in FIG. 5 for each LCH. It should be noted that, after a plurality of LCHs fail to request the uplink grant, the terminal device may initiate random access for the plurality of LCHs on a same random access resource, to request a corresponding uplink grant; or may initiate random access for the plurality of LCHs on different random access resources based on different LCHs, to request a corresponding uplink grant.

According to the foregoing steps in this application, after the terminal device fails, for a number of times, to request an uplink grant by transmitting the SR by using one proper numerology, the terminal device reselects another proper numerology to transmit the SR, to reduce an unnecessary random access procedure, and reduce a delay and a possible conflict probability that are caused by the random access procedure.

For example, the second numerology shown in FIG. 3 corresponds to a setting of first dsr-TransMax, the third numerology corresponds to a setting of second dsr-TransMax, and the fifth numerology corresponds to a setting of third dsr-TransMax. In the method shown in FIG. 5, if the terminal device has not received the uplink grant after a number of times for which the terminal device transmits the SR by using the first numerology reaches first dsr-TransMax, the terminal device may continue to transmit the SR by using the third numerology. If the terminal device has not received the uplink grant when a number of times for which the terminal device transmits the SR reaches second dsr-TransMax (in this case, a total number of SR transmission is a sum of a value of first dsr-TransMax and a value of second dsr-TransMax), the terminal device may further continue to transmit the SR by using the fifth numerology. It can be learned that the terminal device may transmit the SR for many times by using different numerologies, to request the uplink grant. Consequently, a delay is very large.

Optionally, in step 201 in the foregoing, the SR parameters in the SR configuration further include a setting of a maximum quantity of transmission times of the terminal device: UE-TransMax. It may be understood that one dsr-TransMax is set for one numerology, and one UE-TransMax is set for the terminal device. UE-TransMax is an integer greater than or equal to 1, and is used to indicate a total number of times for which the terminal device transmits the SR. This is applicable to a case in which a plurality of processes in which the SR is transmitted on the LCH of the terminal device are executed in series. In an example, a first SR is transmitted on a first LCH of the terminal device. In this procedure, if a second LCH triggers a second SR, the second LCH needs to start, after the first LCH completes the process of transmitting the SR, the process of transmitting the second SR. In another example, if the first LCH and the second LCH of the terminal device respectively trigger the first SR and the second SR at the same time, the terminal device first completes a process of transmitting the SR on one LCH based on priorities of the LCHs, and then performs a process of transmitting the SR on the other LCH. By applying UE-TransMax in the SR configuration, a delay of transmitting the SR by the terminal device to request the uplink grant can be reduced. For example, with reference to Table 1, Table 3 shows a form of an SR configuration including the parameter UE-TransMax.

**Table 3 SR configuration having the parameter UE-TransMax**

| |
|---|
| > UE-TransMax |
| > NumerologyID1 |
| >> sr-PUCCH-ResourceIndex1 |
| >> sr-ConfigIndex1 |
| >> dsr-TransMax1 |
| >> sr-ProhibitTimer1 |
| > NumerologyID2 |
| >> sr-PUCCH-ResourceIndex2 |
| >> sr-ConfigIndex2 |
| >> dsr-TransMax2 |
| >> sr-ProhibitTimer2 |

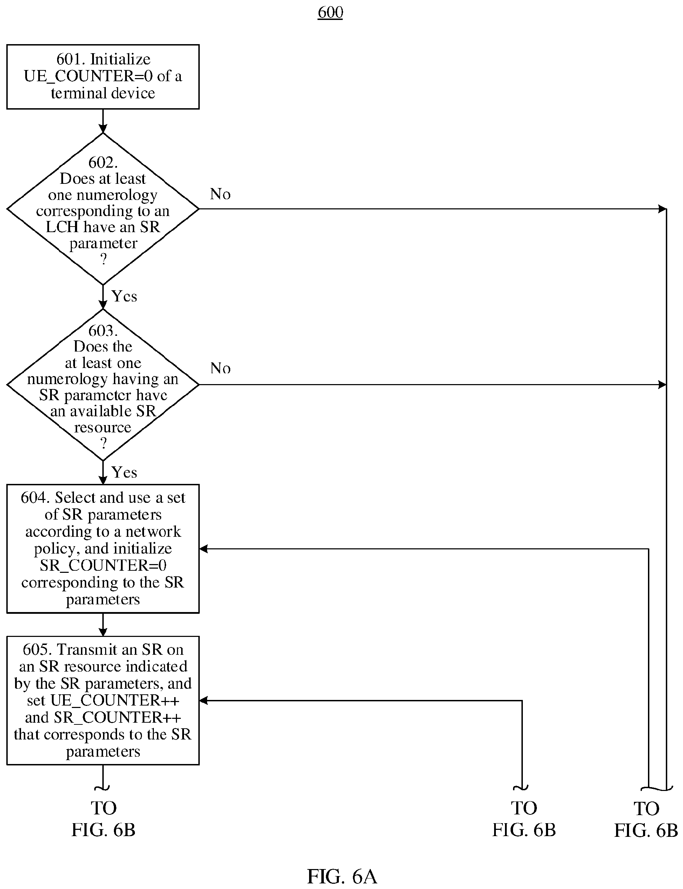

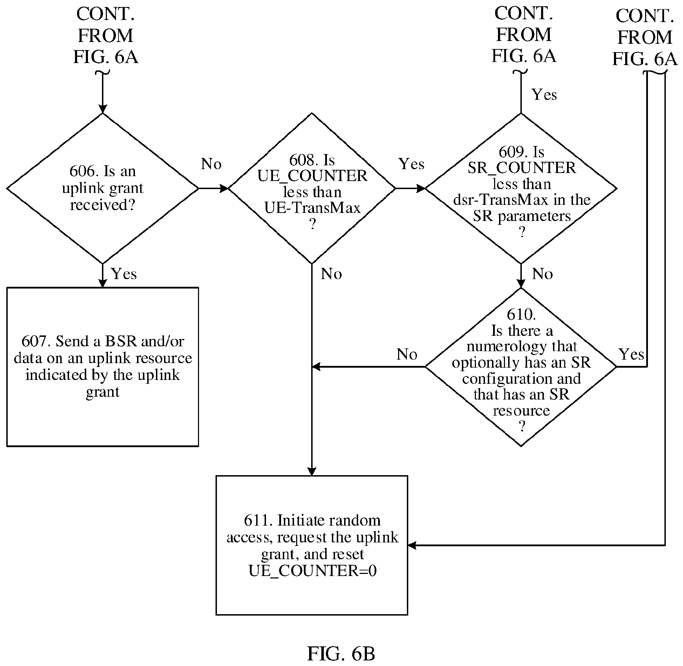

In the foregoing example, whether corresponding SR_COUNTER reaches corresponding dsr-TransMax is checked, each time the SR is transmitted on the LCH, on which uplink data needs to be sent, of the terminal device. Moreover, whether terminal device-based UE_COUNTER reaches UE-TransMax is further checked. After the SR is transmitted on the LCH by using one numerology, if SR_COUNTER reaches corresponding dsr-TransMax but UE_COUNTER does not reach UE-TransMax, the SR may continue to be transmitted on the LCH by using another numerology. Regardless of a specific numerology used to transmit the SR on the LCH, the terminal device initiates random access to request the uplink grant, provided that a total number of times for which the SR is transmitted reaches UE-TransMax. Specifically, the terminal device may use a method in FIG. 6A and FIG. 6B.

FIG. 6A and FIG. 6B are a schematic flowchart of another method for transmitting an SR according to this application. The method 600 may be applied to the scenario, in FIG. 1, in which the uplink grant is requested after the terminal device 110 receives the SR configuration sent by the access network device 120 and when there is to-be-sent uplink data on an LCH. In the method example in FIG. 6A and FIG. 6B, SR parameters received by the terminal device include a setting of UE-TransMax. The method procedure shown in FIG. 6A and FIG. 6B may be performed by the terminal device 110 in FIG. 1. The method includes but is not limited to the following steps.

601. Initialize a counter of the terminal device, that is, UE_COUNTER=0.

UE_COUNTER is a counter maintained by the terminal device, and is used to calculate a total number of times for which the terminal device transmits an SR. Generally, before the terminal device transmits the SR, UE_COUNTER is initialized to 0. Each time after the terminal device transmits the SR, a value of UE_COUNTER increases by 1, until the value of UE_COUNTER reaches UE-TransMax that is set in the SR parameters, indicating that the terminal device fails to request the uplink grant.

602. The terminal device determines whether at least one numerology corresponding to the LCH has an SR parameter.

603. The terminal device further determines whether the at least one numerology having the SR parameter has an available SR resource.

604. The terminal device selects and uses a set of SR parameters according to a preset policy, and initializes a counter corresponding to the SR parameters, that is, SR_COUNTER=0.

605. The terminal device transmits the SR on the SR resource indicated by the selected SR parameters, and increases the value of UE_COUNTER and a value of SR_COUNTER that corresponds to the SR parameters by 1.

Steps 602 to 605 are similar to steps 401 to 404 in the foregoing, and details are not described herein again. A main difference is that compared with step 404, in step 605, the terminal device further increases the value of UE_COUNTER by 1.

606. The terminal device determines whether the uplink grant is received.

In this step, the terminal device determines, based on received information in a downlink control channel, whether the access network device has allocated an uplink resource to an LCH that is of the terminal device and on which uplink data needs to be sent. Specifically, if the uplink grant sent by the access network device is received, step 607 is performed; otherwise, step 608 is performed.

607. The terminal device transmits a BSR and/or data on an uplink resource indicated by the uplink grant.

Step 607 is similar to step 406 in the foregoing, and details are not described herein again.

608. The terminal device determines whether UE_COUNTER is less than UE-TransMax in the SR configuration.

Step 606 indicates that the terminal device has not received, after previously transmitting the SR, the uplink grant sent by the access network device. In this step, the terminal device determines whether UE_COUNTER has not reached a total maximum number of SR transmission, that is, UE-TransMax, in the SR configuration. Specifically, if UE_COUNTER has reached the total maximum number of SR transmission, that is, UE-TransMax, in the SR configuration, step 609 is performed; or if UE_COUNTER has not reached the total maximum number of SR transmission, that is, UE-TransMax, in the SR configuration, step 611 is performed.

609. The terminal device further determines whether SR_COUNTER is less than dsr-TransMax in the SR parameters.

Step 608 indicates that the terminal device has not received, after previously transmitting the SR, the uplink grant sent by the access network device, and the total number of SR transmission from the UE has not reached UE-TransMax. In this case, the UE may further continue to transmit the SR on the SR resource indicated by the SR parameter configuration. In this step, the terminal device determines whether SR_COUNTER has not reached a maximum number of transmission times dsr-TransMax in the SR parameters. Specifically, if SR_COUNTER has reached the maximum number of transmission times dsr-TransMax in the SR parameters, step 605 is performed; or if SR_COUNTER has not reached the maximum number of transmission times dsr-TransMax in the SR parameters, step 610 is performed.

610. The terminal device determines whether there is a numerology that optionally has an SR parameter and that has an SR resource.

Step 609 indicates that the terminal device previously selects, according to the preset policy, a numerology and an SR parameter configured for the numerology to transmit the SR, and has not successfully obtained the uplink resource; and the total number of SR transmission from the UE has not reached UE-TransMax. In this case, the UE may further transmit the SR on another proper SR resource. In this step, the terminal device deletes, from an available numerology set, the numerology corresponding to the used SR resource, and determines whether an updated numerology set is empty. If the updated numerology set is not empty, step 604 is performed; or if the updated numerology set is empty, step 605 is performed.

It should be understood that, a procedure in which the terminal device cyclically performs steps 604 to 610 is equivalent to that on the premises of ensuring that a total number of SR transmission fro the terminal device is less than UE-TransMax, the terminal device sequentially selects, according to the preset policy, a proper numerology from the available numerology set corresponding to the LCH on which uplink data needs to be sent, and transmits the SR on a corresponding SR resource.

611. The terminal device initiates random access, to request the uplink grant, and resets UE_COUNTER=0.

In this step, the terminal device stops transmitting the SR, releases all SR resources that are of the LCH and that correspond to the SR parameters, and initiates random access to the access network device, to request the uplink grant. Further, the terminal device resets UE_COUNTER=0.

It should be understood that, when a plurality of LCHs of the terminal device each have to-be-sent uplink data, the terminal device sequentially performs steps 601 to 611 for each LCH.

According to the foregoing steps in this application, in serial SR processes, after the SR fails to be transmitted on one LCH to request the uplink grant and a total number of SR transmission on the LCH reaches the maximum number of SR transmission of the terminal device, random access is initiated to request the uplink grant, to avoid continuously transmitting the SR request, and reduce a delay of requesting the uplink grant.

Optionally, in step 201 in the foregoing, the SR parameters in the SR configuration further includes a setting of a maximum number of times for each of a plurality of LCHs, that is, LCH-TransMax, where LCH-TransMax is used to indicate a total maximum number of SR transmission on an LCH of the terminal device. This is applicable to a case in which a plurality of processes in which the SR is transmitted on the LCH of the terminal device are executed in series or in parallel. In an example, a first SR is transmitted on a first LCH of the terminal device. In this procedure, if a second LCH triggers a second SR, a process of transmitting the second SR may be independently executed on the second LCH. In another example, if the first LCH and the second LCH of the terminal device respectively trigger the first SR and the second SR at the same time, the first LCH and the second LCH may respectively execute respective SR transmission processes. By applying LCH-TransMax in the SR configuration, a delay of transmitting the SR by the terminal device to request the uplink grant can be reduced. For example, with reference to Table 1, Table 4 shows a form of an SR configuration including the parameter LCH-TransMax. LCH-TransMaxList includes an identifier or an index of at least one LCH and a setting of LCH-TransMax corresponding to the LCH, where LCH-TransMax is an integer greater than or equal to 1. Further, if a plurality of LCHs have a same setting of LCH-TransMax, LCH-TransMaxList may include identifiers or indexes of the plurality of LCHs and the setting of LCH-TransMax setting corresponding to the plurality of LCHs. Particularly, when all LCHs of the terminal device have a same setting of LCH-TransMax, the foregoing setting of UE-TransMax may be used to replace the setting of LCH-TransMaxList.

**Table 4 SR configuration having the parameter LCH-TransMax**

| |
|---|
| > LCH-TransMaxList |
| > NumerologyID1 |
| >> sr-PUCCH-ResourceIndex1 |
| >> sr-ConfigIndex1 |
| >> dsr-TransMax1 |
| >> sr-ProhibitTimer1 |
| > NumerologyID2 |
| >> sr-PUCCH-ResourceIndex2 |
| >> sr-ConfigIndex2 |
| >> dsr-TransMax2 |
| >> sr-ProhibitTimer2 |

In an example in which the SR configuration has the setting of LCH-TransMax, when an LCH triggers transmission of the SR, the terminal device checks, each time the SR is transmitted, whether corresponding SR_COUNTER reaches corresponding dsr-TransMax. Moreover, the terminal device further checks whether LCH-based LCH_COUNTER reaches LCH-TransMax. After the terminal device transmits the SR by using one numerology, if SR_COUNTER reaches corresponding dsr-TransMax but LCH_COUNTER does not reach LCH-TransMax, the terminal device may continue to transmit the SR by using another numerology. Regardless of a specific numerology used by the terminal device to transmit the SR, the terminal device initiates random access to request the uplink grant, provided that a total number of SR transmission reaches LCH-TransMax.

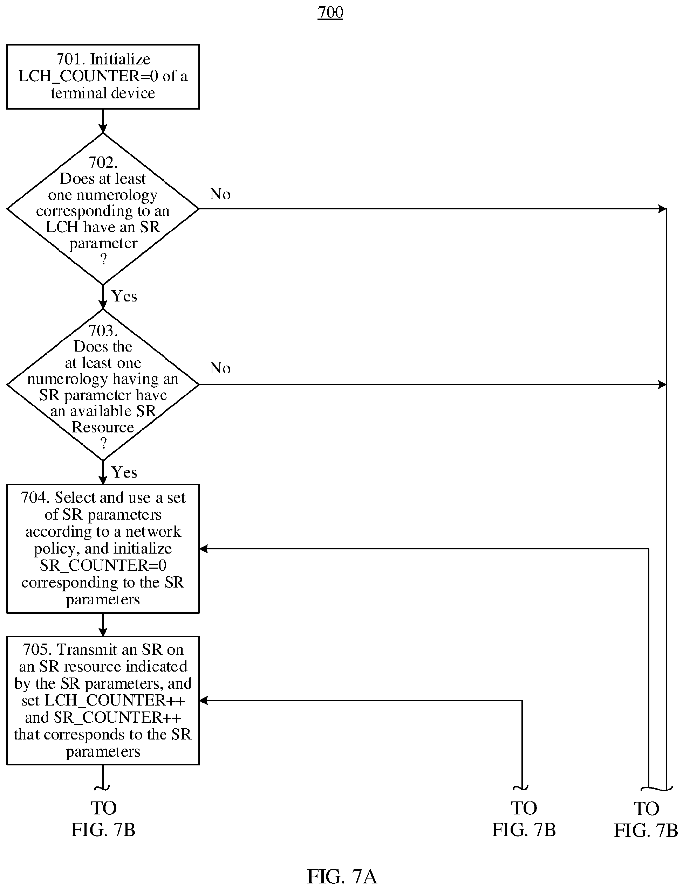

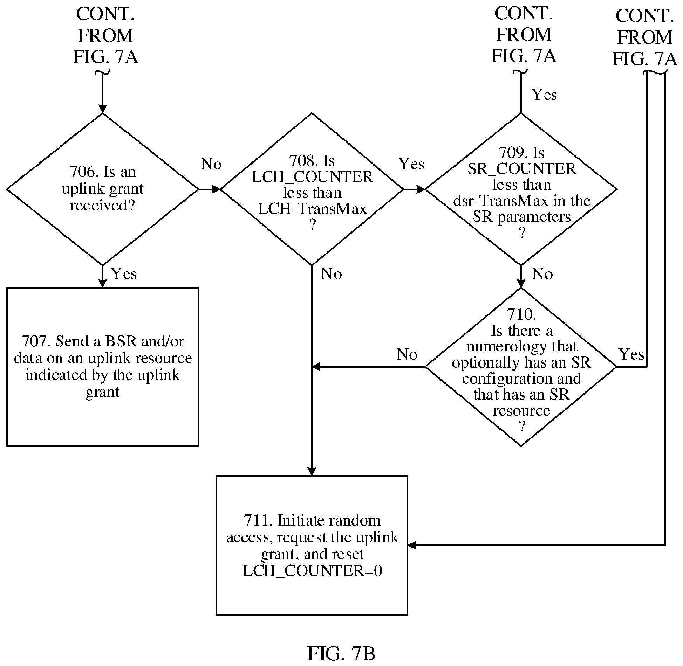

FIG. 7A and FIG. 7B are a schematic flowchart of yet another method for transmitting an SR according to this application. The method 700 may be applied to the scenario, in FIG. 1, in which the uplink grant is requested after the terminal device 110 receives the SR configuration sent by the access network device 120 and when there is to-be-sent uplink data on an LCH. In the method example in FIG. 7A and FIG. 7B, SR parameters received by a terminal device include a setting of LCH-TransMax. The method procedure shown in FIG. 7A and FIG. 7B may be performed by the terminal device 110 in FIG. 1. The method includes but is not limited to the following steps.

701. Initialize a counter of the terminal device, that is, LCH_COUNTER=0.

702. The terminal device determines whether at least one numerology corresponding to the LCH has an SR parameter.

703. The terminal device further determines whether the at least one numerology having the SR parameter has an available SR resource.

704. The terminal device selects and uses a set of SR parameters according to a preset policy, and initializes a counter corresponding to the SR parameters, that is, SR_COUNTER=0.

705. The terminal device transmits the SR on the SR resource indicated by the selected SR parameters, and increases the value of LCH_COUNTER and a value of SR_COUNTER that corresponds to the SR parameters by 1.

706. The terminal device determines whether the uplink grant is received.

707. The terminal device sends a BSR and/or data on an uplink resource indicated by the uplink grant.

708. The terminal device determines whether LCH_COUNTER is less than LCH-TransMax in the SR configuration.

709. The terminal device further determines whether SR_COUNTER is less than dsr-TransMax in the SR parameters.

710. The terminal device determines whether there is a numerology that optionally has an SR parameter and that has an SR resource.

711. The terminal device initiates random access, to request the uplink grant, and resets LCH_COUNTER=0.

Steps 701 to 711 are similar to steps 601 to 611 in the foregoing, and details are not described herein again. The main differences are: Step 701 is initializing the LCH_COUNTER=0 of the LCH triggering the SR. Step 705 is transmitting the SR on the SR resource indicated by the SR parameters, and setting LCH_COUNTER++ and SR_COUNTER++ that corresponds to the SR parameters. Step 708 is determining whether LCH_COUNTER is less than LCH-TransMax. Step 711 is initiating random access, to request the uplink grant, and resetting LCH_COUNTER=0.

It should be understood that, when a plurality of LCHs of the terminal device each have to-be-sent uplink data, the terminal device sequentially performs steps 701 to 711 for each LCH. It should be understood that in an example in which SR processes are executed in series, the terminal device sequentially performs the steps shown in FIG. 7A and FIG. 7B for each LCH. In an example in which SR processes are performed in parallel, the terminal device may simultaneously perform the steps shown in FIG. 7A and FIG. 7B for each LCH. It should be noted that, after a plurality of LCHs fail to request the uplink grant, the terminal device may initiate random access for the plurality of LCHs on a same random access resource, to request a corresponding uplink grant; or may initiate random access for the plurality of LCHs on different random access resources based on different LCHs, to request a corresponding uplink grant.

According to the foregoing steps in this application, in serial or parallel SR processes, after the SR fails to be transmitted on one LCH to request the uplink grant and a total number of SR transmission on the LCH reaches a maximum number of SR transmission on the LCH, random access is initiated to request the uplink grant, to avoid continuously transmitting the SR request, and reduce a delay of requesting the uplink grant.

Further, a default numerology may be further used for communication between the terminal device and the access network device. The terminal device and the access network device may preferentially use the default numerology to transmit data of different services, or may preferentially use numerologies corresponding to different services to transmit data. The terminal device may preferentially choose to use an SR resource of the default numerology to request uplink grants of different services, or may preferentially choose to use SR resources of numerologies corresponding to different services to request uplink grants. The default numerology and a policy of using the default numerology (for example, a priority) are configured by the access network device, negotiated between the access network device and the terminal device, or determined in another manner such as stipulation in a protocol, and the correspondence may be included in the MAC configuration and sent by the access network device to the terminal device. Alternatively, the correspondence may be sent to the terminal device in another manner, for example, by using RRC signaling or MAC control information. This is not limited in this application. In this case, one of a plurality of numerologies supported by the terminal device is a default numerology. For example, Table 5 shows an SR configuration having SR parameters of a default numerology.

**Table 5 SR configuration having SR parameters of a default numerology**

| |
|---|
| > Numerology_default |
| >> sr-PUCCH-Resource_default |
| >> sr-Config_default |
| >> dsr-TransMax_default |
| >> sr-ProhibitTimer_default |
| > NumerologyIndex1 |
| >> sr-PUCCH-ResourceIndex1 |
| >> sr-ConfigIndex1 |
| >> dsr-TransMax1 |
| >> sr-ProhibitTimer1 |
| > NumerologyIndex2 |
| >> sr-PUCCH-ResourceIndex2 |
| >> sr-ConfigIndex2 |
| >> dsr-TransMax2 |
| >> sr-ProhibitTimer2 |

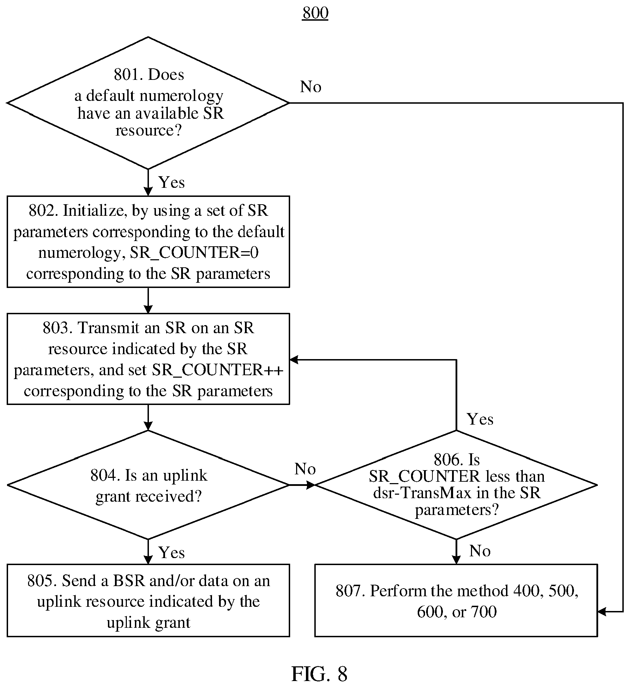

In an implementation, the terminal device preferentially uses the SR resource corresponding to the SR parameters of the default numerology to transmit the SR. FIG. 8 is a schematic flowchart of yet another method for transmitting an SR according to this application. The method 800 may be applied to the scenario, in FIG. 1, in which the uplink grant is requested after the terminal device 110 receives the SR configuration sent by the access network device 120 and when there is to-be-sent uplink data on an LCH. The method procedure shown in FIG. 8 may be performed by the terminal device 110 in FIG. 1. The method includes but is not limited to the following steps.

801. The terminal device determines whether a default numerology has an available SR resource.

The SR resource of the default numerology may be shared by a plurality of LCHs. Therefore, when there is to-be-sent uplink data on one LCH, the terminal device needs to determine whether the SR resource of the default numerology has been used. Specifically, if the default numerology has no available SR resource, step 807 is performed; otherwise, step 802 is performed.

802. The terminal device uses the SR parameters corresponding to the default numerology, and initializes a counter corresponding to the SR parameters, that is, counter SR_COUNTER=0.

803. The terminal device transmits an SR on an SR resource indicated by the SR parameters corresponding to the default numerology, and increases a value of SR_COUNTER corresponding to the SR parameters by 1.

804. The terminal device determines whether the uplink grant is received.

In this step, if the uplink grant sent by the access network device is received, step 805 is performed; otherwise, step 806 is performed.

805. The terminal device sends a BSR and/or uplink data on an uplink resource indicated by the uplink grant.

806. The terminal device determines whether SR_COUNTER is less than dsr-TransMax in the SR parameters corresponding to the default numerology.

In this step, if SR_COUNTER is less than dsr-TransMax in the SR parameters corresponding to the default numerology, step 803 is performed; otherwise, step 807 is performed.

807. The terminal device performs the method 400, the method 500, the method 600, or the method 700.

Step 806 indicates that the terminal device fails to transmit the SR on the SR resource of the default numerology to request the uplink grant. In this case, the terminal device may separately perform the method 400, the method 500, the method 600, or the method 700, to continue to request the uplink grant in another manner.

According to the foregoing steps in this application, the terminal device preferentially transmits the SR on the SR resource of the default numerology to request the uplink grant, thereby reducing complexity of an SR mechanism.

In another implementation, the terminal device preferentially requests an uplink grant by using an SR resource of another numerology different from the default numerology, and after failing to request the uplink grant, attempts to further request the uplink grant by using the SR resource of the default numerology. In this case, in the method 400, the method 500, the method 600, or the method 700, the default numerology is used as a numerology corresponding to an LCH on which uplink data needs to be sent, and a priority of the numerology is lower than a priority of another numerology corresponding to the LCH. The terminal device may still perform the method 400, the method 500, the method 600, or the method 700, to request the uplink grant.

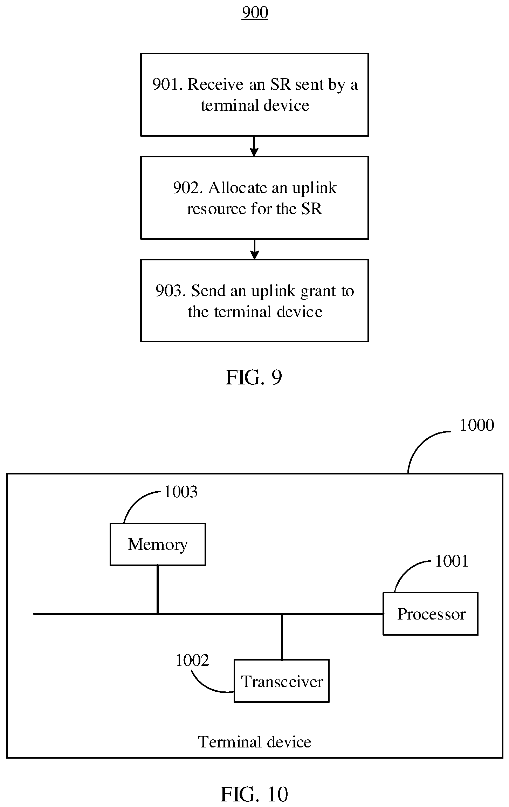

FIG. 9 is a schematic flowchart of yet another method for transmitting an SR according to this application. The method 900 may be applied to the scenario, shown in FIG. 1, in which the access network device 120 sends the uplink grant to the terminal device 110 after the terminal device 110 transmits the SR. The method procedure shown in FIG. 9 may be performed by the access network device 120 in FIG. 1. The method includes but is not limited to the following steps.

901. The access network device receives the SR transmitted by the terminal device.

In this step, the access network device determines, by receiving the SR transmitted by the terminal device on one SR resource corresponding to a numerology, an LCH that is of the terminal device and on which uplink data needs to be sent. Because the access network device has a correspondence between LCHs and numerologies and information about an SR parameter configuration corresponding to each numerology, the access network device may determine, in the SR resource used by the terminal device to transmit the SR, an LCH on which the terminal device requests the uplink grant.

It should be noted that before step 901, the access network device sends an SR configuration to the terminal device. Optionally, after receiving the SR configuration sent by the access network device, the terminal device may store the SR configuration in an internal memory, and may directly obtain the SR configuration from the memory when uplink data needs to be sent subsequently.

902. The access network device allocates an uplink resource to the SR.

In this step, the access network device determines, based on an SR resource used for the received SR, resources to be allocated to the terminal device. For example, as shown in FIG. 3, if the access network device receives the SR transmitted by the terminal device on the SR resource corresponding to the first SR parameters, the access network device allocates a proper uplink resource to the terminal device on the uplink resource corresponding to the second numerology.

903. The access network device sends the uplink grant to the terminal device.

In this step, the access network device adds, to the uplink grant, information about the uplink resource allocated to the terminal device, and sends the uplink grant to the terminal device. The uplink grant is used to indicate the uplink resource allocated to the terminal device. Specifically, the access network device may specially send an uplink grant on a downlink control channel, or may add an uplink grant to other downlink control information. This is not limited in this solution.

According to the foregoing steps in this application, the access network device can allocate different uplink resources to the terminal device based on SRs triggered by different services of the terminal device, to implement differentiated scheduling of different services.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like. A person skilled in the art may use different methods to implement the described functions for each particular application, but it should not be considered that the implementation goes beyond the scope of this patent application.

The foregoing describes the method embodiments of this application in detail with reference to FIG. 2 to FIG. 9. The following describes apparatus embodiments of this application in detail with reference to FIG. 10 to FIG. 13. It should be understood that the apparatus embodiments and the method embodiments correspond to each other. For similar descriptions, refer to the method embodiments. It should be noted that the apparatus embodiments may be used in conjunction with the foregoing methods, or may be independently used.

FIG. 10 is a schematic block diagram of a terminal device 1000 according to this application. The terminal device 1000 may correspond to (for example, may be configured as or may be) the terminal device described in any one of the methods 200, 400, 500, 600, 700, 800, and 900. The terminal device 1000 may include a processor 1001 and a transceiver 1002. The processor 1001 is communicatively coupled to the transceiver 1002. Optionally, the terminal device 1000 further includes a memory 1003. The memory 1003 is communicatively coupled to the processor 1001. Optionally, the processor 1001, the memory 1003, and the transceiver 1002 may be communicatively coupled. The memory 1003 may be configured to store an instruction. The processor 1001 is configured to execute the instruction stored in the memory 1003, to control the transceiver 1002 to receive and/or send information or a signal. In this application, the processor 1001 is configured to invoke a program and data that are stored in the memory 1003, to perform the following operations:

The processor 1001 receives, by using the transceiver 1002, an SR configuration sent by an access network device, where the SR configuration includes identifiers of a plurality of numerologies and SR parameters corresponding to each of the plurality of numerologies.

When there is to-be-sent uplink data on a first LCH of the terminal device, the processor 1001 selects, based on the SR configuration, one SR parameter corresponding to the numerologies, and transmits, by using the transceiver 1002, an SR to the access network device on an SR resource indicated by the SR parameter.

Optionally, the SR configuration that is sent by the radio access network device and that is received by the transceiver 1002 further includes a default numerology and a default SR parameter corresponding to the default numerology.

Optionally, the SR configuration that is sent by the radio access network device and that is received by the transceiver 1002 further includes number of SR transmission from the terminal device.

Optionally, the SR configuration that is sent by the radio access network the device and that is received by the transceiver 1002 further includes identifiers of a plurality of LCHs of the terminal device and a maximum number of SR transmission on each of the plurality of LCHs.

Optionally, if there is to-be-sent uplink data on the first LCH of the terminal device, when the processor 1001 determines, based on the SR configuration, that at least one numerology corresponding to the first LCH has an SR parameter, and an SR resource indicated by the SR parameter is available, the processor 1001 selects a first SR parameter according to a preset policy, where the first SR parameter corresponds to a first numerology; and transmits, by using the transceiver 1002, the SR on a first SR resource indicated by the first SR parameter.

Optionally, when a number of times for which the processor 1001 transmits the SR on the first SR resource by using the transceiver 1002 reaches a first maximum number of SR transmission in the first SR parameter, the processor 1001 stops transmitting the SR on the first SR resource by using the transceiver 1002.

Optionally, when a number of times for which the processor 1001 transmits the SR on the first SR resource by using the transceiver 1002 reaches the maximum number of SR transmission of the terminal device, the processor 1001 stops transmitting the SR on the first SR resource by using the transceiver 1002.

Optionally, when a number of times for which the processor 1001 transmits the SR on the first SR resource by using the transceiver 1002 reaches the maximum number of SR transmission on the LCH, the processor 1001 stops transmitting the SR on the first SR resource by using the transceiver 1002.

Optionally, if a number of SR transmission on the first SR resource reaches the first maximum number of SR transmission but does not reach the maximum number of SR transmission of the terminal device, when the processor 1001 determines that in addition to the first numerology, the first LCH further corresponds to a second numerology, and a second SR resource indicated by a second SR parameter corresponding to the second numerology is available, the processor 1001 selects the second SR parameter configuration according to the preset policy, and transmits the SR on the second SR resource by using the transceiver 1002.

Optionally, when determining that a default SR resource indicated by the default SR parameter corresponding to the default numerology is available, the processor 1001 preferentially selects the default SR parameter, and transmits the SR on the default SR resource by using the transceiver 1002.

It should be noted that the processor 1001 and the transceiver 1002 in the terminal device 1000 described in this application are configured to perform some or all steps performed by the terminal device described in any one of the methods 200, 400, 500, 600, 700, 800, and 900. Herein, to avoid redundancy, detailed descriptions thereof are omitted.

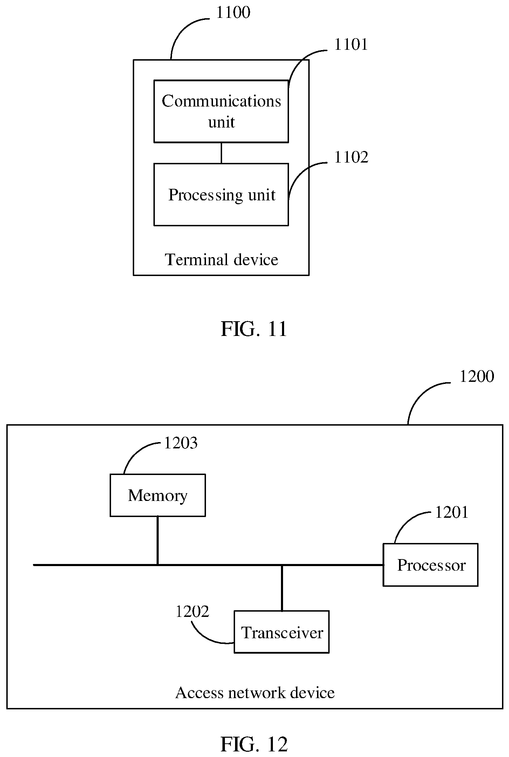

FIG. 11 is another schematic block diagram of a terminal device 1100 according to this application. The terminal device 1100 may correspond to (for example, may be configured as or may be) the terminal device described in any one of the methods 200, 400, 500, 600, 700, 800, and 900. The terminal device 1100 may include a communications unit 1101 and a processing unit 1102. The processing unit 1102 is communicatively coupled to the communications unit 1101. In this application, the terminal device 1100 is presented in a form of functional units. The "unit" herein may be a processor and a memory for executing one or more software or firmware programs, an integrated logic circuit, and/or another component that can provide the foregoing function. The terminal device may use a form shown in FIG. 10. The processing unit 1102 may be implemented by the processor 1001 in FIG. 10, and the communications unit 1101 may be implemented by the transceiver 1002 in FIG. 10. The terminal device 1100 may further include a storage unit, configured to store a program or data to be executed by the processing unit 1102, or store information received and/or sent by using the communications unit 1101.

It should be noted that the communications unit 1101 and the processing unit 1102 in the terminal device 1100 described in this application are configured to perform some or all steps performed by the terminal device described in any one of the methods 200, 400, 500, 600, 700, 800, and 900. Herein, to avoid redundancy, detailed descriptions thereof are omitted.

FIG. 12 is a schematic block diagram of an access network device 1200 according to this application. The access network device 1200 may correspond to (for example, may be configured as or may be) the access network device described in any one of the methods 200, 400, 500, 600, 700, 800, and 900. The access network device 1200 may include a processor 1201 and a transceiver 1202. The processor 1201 is communicatively coupled to the transceiver 1202. Optionally, the access network device 1200 further includes a memory 1203. The memory 1203 is communicatively coupled to the processor 1201. Optionally, the processor 1201, the memory 1203, and the transceiver 1202 may be communicatively coupled. The memory 1203 may be configured to store an instruction. The processor 1201 is configured to execute the instruction stored in the memory 1203, to control the transceiver 1202 to receive and/or send information or a signal. In this application, the processor 1201 is configured to invoke a program and data that are stored in the memory 1202, to perform the following operations:

The processor 1201 generates an SR configuration, where the SR configuration includes identifiers of a plurality of numerologies and an SR parameter corresponding to each of the plurality of numerologies.

The processor 1201 sends the SR configuration to a terminal device by using the transceiver 1202, where the SR configuration is used by the terminal device to transmit an SR.

Optionally, the SR configuration sent by the transceiver 1202 to the terminal device further includes a default numerology and a default SR parameter corresponding to the default numerology.

Optionally, the SR configuration sent by the transceiver 1202 to the terminal device further includes a maximum number of SR transmission of the terminal device.

Optionally, the SR configuration sent by the transceiver 1202 to the terminal device further includes identifiers of a plurality of LCHs of the terminal device and a maximum number of SR transmission on each of the plurality of LCHs.

It should be noted that the processor 1201 and the transceiver 1202 in the access network device 1200 described in this application are configured to perform some or all steps performed by the access network device described in any one of the methods 200, 400, 500, 600, 700, 800, and 900. Herein, to avoid redundancy, detailed descriptions thereof are omitted.

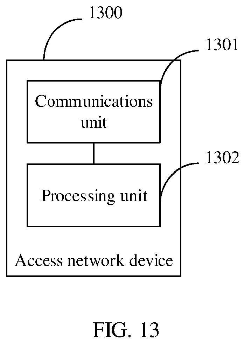

FIG. 13 is another schematic block diagram of an access network device 1300 according to this application. The access network device 1300 may correspond to (for example, may be configured as or may be) the access network device described in any one of the methods 200, 400, 500, 600, 700, 800, and 900. The access network device 1300 may include a communications unit 1301 and a processing unit 1302. The processing unit 1302 is communicatively coupled to the communications unit 1301. In this application, the access network device 1300 is presented in a form of functional units. The "unit" herein may be a processor and a memory for executing one or more software or firmware programs, an integrated logic circuit, and/or another component that can provide the foregoing function. The access network device may use a form shown in FIG. 12. The processing unit 1302 may be implemented by the processor 1201 in FIG. 12, and the communications unit 1301 may be implemented by the transceiver 1202 in FIG. 12. The access network device 1300 may further include a storage unit, configured to store a program or data to be executed by the processing unit 1302, or store information received and/or sent by using the communications unit 1301.

It should be noted that the communications unit 1301 and the processing unit 1302 in the access network device 1300 described in this application are configured to perform some or all steps performed by the access network device described in any one of the methods 200, 400, 500, 600, 700, 800, and 900. Herein, to avoid redundancy, detailed descriptions thereof are omitted.

It should be understood that the processor (1001 or 1201) in the apparatus embodiments of this application may be a central processing unit (central processing unit, CPU), a network processor (network processor, NP), a hardware chip, or any combination thereof. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory (1003 or 1203) in the apparatus embodiments of this application may be a volatile memory (volatile memory), for example, a random-access memory (random-access memory, RAM); or may be a non-volatile memory (non-volatile memory), for example, a read-only memory (read-only memory, ROM), a flash memory (flash memory), a hard disk drive (hard disk drive, HDD), or a solid-state drive (solid-state drive, SSD); or may be a combination of the foregoing types of memories.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this patent application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A method for transmitting a scheduling request, SR, carried out by a terminal device comprising:
obtaining (201), by the terminal device, an SR configuration sent by an access network device, wherein the SR configuration comprises SR parameters corresponding to a plurality of wireless physical layer parameter numerologies; and
selecting, by the terminal device based on the SR configuration, one SR parameter corresponding to a numerology, if there is to-be-sent uplink data on a logical channel, LCH, of the terminal device, and transmitting (203) an SR to the access network device on an SR resource indicated by the SR parameter,
wherein the selecting, by the terminal device based on the SR configuration, one SR parameter corresponding to the numerology, if there is to-be-sent uplink data on an LCH of the terminal device, and transmitting (203) an SR to the access network device on an SR resource indicated by the SR parameter comprises:
when determining that at least one numerology corresponding to the LCH has an SR parameter, and an SR resource indicated by the SR parameter is available, selecting, by the terminal device, a first SR parameter according to a preset policy, wherein the first SR parameter corresponds to a first numerology; and transmitting (203) the SR on a first SR resource indicated by the first SR parameter,
wherein the preset policy comprises:
selecting, by the terminal device from an available SR resource, the first SR parameter corresponding to the earliest arrived first SR resource.

2. The method according to claim 1, wherein the SR configuration comprises a plurality of maximum number of SR transmission corresponding to a plurality of LCHs of the terminal device, and the maximum number of SR transmission on the LCH is used to indicate a total maximum number of times for which the SR is transmitted on the LCH.

3. The method according to claim 1 or 2, wherein the selecting, by the terminal device based on the SR configuration, one SR parameter configuration corresponding to the numerology, if there is to-be-sent uplink data on an LCH of the terminal device, and transmitting an SR to the access network device on an SR resource indicated by the SR parameter comprises:
if a number of SR transmission on a first SR resource reaches a first maximum number of SR transmission but does not reach the maximum number of SR transmission on the LCH,
when determining that in addition to the first numerology, the LCH further corresponds to a second numerology, and a second SR resource indicated by a second SR parameter corresponding to the second numerology is available, selecting, by the terminal device, the second SR parameter according to a preset policy, and transmitting the SR on the second SR resource.

4. A terminal device (1000), comprising a processor (1001) and a transceiver (1002), wherein
the transceiver (1002) is communicatively coupled to the processor (1001), and is configured to obtain an SR configuration sent by an access network device, wherein the SR configuration comprises SR parameters corresponding to a plurality of numerologies;
the processor (1001) is configured to select, based on the SR configuration, one SR parameter corresponding to a numerology, if there is to-be-sent uplink data on a first LCH of the terminal device; and
the transceiver (1002) is further configured to transmit an SR to the access network device on an SR resource indicated by the SR parameter,
wherein that the processor is configured to select, based on the SR configuration, one SR parameter corresponding to the numerology, if there is to-be-sent uplink data on a first LCH of the terminal device comprises:
when determining that at least one numerology corresponding to the first LCH has an SR parameter, and an SR resource indicated by the SR parameter is available, selecting a first SR parameter according to a preset policy, wherein the first SR parameter corresponds to a first numerology; and
transmitting the SR to the access network device on an SR resource indicated by the SR parameter comprises:
transmitting the SR to the access network device on a first SR resource indicated by the first SR parameter,
wherein the preset policy comprises:
selecting, by the terminal device from an available SR resource, the first SR parameter corresponding to the earliest arrived first SR resource.

5. The terminal device (1000) according to claim 4, wherein the SR configuration comprises a plurality of maximum number of SR transmission corresponding to a plurality of LCHs of the terminal device, and the maximum number of SR transmission on the LCH is used to indicate a total maximum number of times for which the SR is transmitted on the LCH.

6. The terminal device (1000) according to claim 4 or 5, wherein that the processor is configured to select, based on the SR configuration, one SR parameter configuration corresponding to the numerology, if there is to-be-sent uplink data on a first LCH of the terminal device comprises:
if a number of SR transmission on a first SR resource reaches a first maximum number of SR transmission but does not reach the maximum number of SR transmission on the first LCH,
when determining that in addition to the first numerology, the first LCH further corresponds to a second numerology, and a second SR resource indicated by a second SR parameter corresponding to the second numerology is available, selecting the second SR parameter according to a preset policy, and instructing the transceiver to transmit the SR on the second SR resource.

7. A computer-readable storage medium, comprising an instruction, wherein when the instruction is run on a terminal device (1000), the terminal device (1000) is enabled to perform the method according to any one of claims 1 to 3.

8. A computer program product, including computer program code, wherein when the computer program code is run by a communications unit, a processing unit, a transceiver, or a processor of a terminal device, the terminal device is enabled to perform the method according to any one of claims 1 to 3.

## Patentansprüche

1. Verfahren zum Übertragen einer Planungsanfrage, SR, das durch eine Endgerätevorrichtung durchgeführt wird, umfassend:
Erlangen (201), durch die Endgerätevorrichtung, einer SR-Konfiguration, die durch eine Zugangsnetzwerkvorrichtung gesendet wird, wobei die SR-Konfiguration SR-Parameter umfasst, die einer Vielzahl von Parameternumerologien einer drahtlosen physikalischen Schicht entsprechen; und
Auswählen, durch die Endgerätevorrichtung basierend auf der SR-Konfiguration, eines SR-Parameters, der einer Numerologie entspricht, wenn auf einem logischen Kanal, LCH, der Endgerätevorrichtung zu sendende Uplink-Daten vorhanden sind, und Übertragen (203) einer SR an die Zugangsnetzwerkvorrichtung auf einer SR-Ressource, die durch den SR-Parameter angegeben wird,
wobei das Auswählen, durch die Endgerätevorrichtung basierend auf der SR-Konfiguration, eines SR-Parameters, welcher der Numerologie entspricht, wenn zu sendende Uplink-Daten auf einem LCH der Endgerätevorrichtung vorhanden sind, und Übertragen (203) einer SR an die Zugangsnetzwerkvorrichtung auf einer SR-Ressource, die durch den SR-Parameter angegeben wird, Folgendes umfassen:
wenn bestimmt wird, dass mindestens eine dem LCH entsprechende Numerologie einen SR-Parameter aufweist und eine SR-Ressource, die durch den SR-Parameter angegeben wird, verfügbar ist, Auswählen, durch die Endgerätevorrichtung, eines ersten SR-Parameters gemäß einer voreingestellten Richtlinie, wobei der erste SR-Parameter einer ersten Numerologie entspricht; und Übertragen (203) der SR auf einer ersten SR-Ressource, die durch den ersten SR-Parameter angegeben wird,
wobei die voreingestellte Richtlinie Folgendes umfasst:
Auswählen, durch die Endgerätevorrichtung aus einer verfügbaren SR-Ressource, des ersten SR-Parameters, welcher der als erstes eingetroffenen ersten SR-Ressource entspricht.

2. Verfahren nach Anspruch 1, wobei die SR-Konfiguration eine Vielzahl von maximalen Anzahlen von SR-Übertragungen, die einer Vielzahl von LCHs der Endgerätevorrichtung entsprechen, umfasst und die maximale Anzahl von SR-Übertragungen auf dem LCH dazu verwendet wird, eine maximale Gesamtanzahl von Malen anzugeben, für welche die SR auf dem LCH übertragen wird.

3. Verfahren nach Anspruch 1 oder 2, wobei das Auswählen, durch die Endgerätevorrichtung basierend auf der SR-Konfiguration, einer SR-Parameterkonfiguration, die der Numerologie entspricht, wenn zu sendende Uplink-Daten auf einem LCH der Endgerätevorrichtung vorhanden sind, und Übertragen einer SR an die Zugangsnetzwerkvorrichtung auf einer SR-Ressource, die durch den SR-Parameter angegeben wird, Folgendes umfassen:
wenn eine Anzahl von SR-Übertragungen auf einer ersten SR-Ressource eine erste maximale Anzahl von SR-Übertragungen erreicht, aber nicht die maximale Anzahl von SR-Übertragungen auf dem LCH erreicht,
wenn bestimmt wird, dass der LCH zusätzlich zu der ersten Numerologie ferner einer zweiten Numerologie entspricht und eine zweite SR-Ressource, die durch einen zweiten SR-Parameter, welcher der zweiten Numerologie entspricht, angegeben wird, verfügbar ist, Auswählen, durch die Endgerätevorrichtung, des zweiten SR-Parameters gemäß einer voreingestellten Richtlinie und Übertragen der SR auf der zweiten SR-Ressource.

4. Endgerätevorrichtung (1000), umfassend einen Prozessor (1001) und einen Transceiver (1002), wobei
der Transceiver (1002) kommunikativ mit dem Prozessor (1001) gekoppelt ist und dazu konfiguriert ist, eine SR-Konfiguration, die durch eine Zugangsnetzwerkvorrichtung gesendet wird, zu erlangen, wobei die SR-Konfiguration SR-Parameter umfasst, die einer Vielzahl von Numerologien entsprechen;
der Prozessor (1001) dazu konfiguriert ist, basierend auf der SR-Konfiguration einen SR-Parameter auszuwählen, der einer Numerologie entspricht, wenn zu sendende Uplink-Daten auf einem ersten LCH der Endgerätevorrichtung vorhanden sind; und
der Transceiver (1002) ferner dazu konfiguriert ist, eine SR an die Zugangsnetzwerkvorrichtung auf einer SR-Ressource, die durch den SR-Parameter angegeben wird, zu übertragen,
wobei die Tatsache, dass der Prozessor dazu konfiguriert ist, basierend auf der SR-Konfiguration einen SR-Parameter auszuwählen, welcher der Numerologie entspricht, wenn zu sendende Uplink-Daten auf einem ersten LCH der Endgerätevorrichtung vorhanden sind, Folgendes umfasst:
wenn bestimmt wird, dass mindestens eine Numerologie, die dem ersten LCH entspricht, einen SR-Parameter aufweist und eine SR-Ressource, die durch den SR-Parameter angegeben wird, verfügbar ist, Auswählen eines ersten SR-Parameters gemäß einer voreingestellten Richtlinie, wobei der erste SR-Parameter einer ersten Numerologie entspricht; und
Übertragen der SR an die Zugangsnetzwerkvorrichtung auf einer SR-Ressource, die durch den SR-Parameter angegeben wird, Folgendes umfasst:
Übertragen der SR an die Zugangsnetzwerkvorrichtung auf einer ersten SR-Ressource, die durch den ersten SR-Parameter angegeben wird,
wobei die voreingestellte Richtlinie Folgendes umfasst:
Auswählen, durch die Endgerätevorrichtung aus einer verfügbaren SR-Ressource, des ersten SR-Parameters, welcher der als erstes eingetroffenen ersten SR-Ressource entspricht.

5. Endgerätevorrichtung (1000) nach Anspruch 4, wobei die SR-Konfiguration eine Vielzahl von maximalen Anzahlen von SR-Übertragungen, die einer Vielzahl von LCHs der Endgerätevorrichtung entsprechen, umfasst und die maximale Anzahl von SR-Übertragungen auf dem LCH dazu verwendet wird, eine maximale Gesamtanzahl von Malen anzugeben, für welche die SR auf dem LCH übertragen wird.

6. Endgerätevorrichtung (1000) nach Anspruch 4 oder 5, wobei die Tatsache, dass der Prozessor dazu konfiguriert ist, basierend auf der SR-Konfiguration eine SR-Parameterkonfiguration auszuwählen, die der Numerologie entspricht, wenn zu sendende Uplink-Daten auf einem ersten LCH der Endgerätevorrichtung vorhanden sind, Folgendes umfasst:
wenn eine Anzahl von SR-Übertragungen auf einer ersten SR-Ressource eine erste maximale Anzahl von SR-Übertragungen erreicht, aber nicht die maximale Anzahl von SR-Übertragungen auf dem ersten LCH erreicht,
wenn bestimmt wird, dass der erste LCH zusätzlich zu der ersten Numerologie ferner einer zweiten Numerologie entspricht und eine zweite SR-Ressource, die durch einen zweiten SR-Parameter, welcher der zweiten Numerologie entspricht, angegeben wird, verfügbar ist, Auswählen des zweiten SR-Parameters gemäß einer voreingestellten Richtlinie und Anweisen des Transceivers, die SR auf der zweiten SR-Ressource zu übertragen.

7. Computerlesbares Speichermedium, umfassend eine Anweisung, wobei, wenn die Anweisung auf einer Endgerätevorrichtung (1000) ausgeführt wird, die Endgerätevorrichtung (1000) dazu in die Lage versetzt wird, das Verfahren nach einem der Ansprüche 1 bis 3 durchzuführen.

8. Computerprogrammprodukt, beinhaltend einen Computerprogrammcode, wobei, wenn der Computerprogrammcode durch eine Kommunikationseinheit, eine Verarbeitungseinheit, einen Transceiver oder einen Prozessor einer Endgerätevorrichtung umgesetzt wird, die Endgerätevorrichtung in die Lage versetzt wird, das Verfahren nach einem der Ansprüche 1 bis 3 durchzuführen.

## Revendications

1. Procédé de transmission d'une demande de programmation, SR, effectuée par un dispositif terminal comprenant :
l'obtention (201), par le dispositif terminal, d'une configuration SR envoyée par un dispositif de réseau d'accès, dans lequel la configuration SR comprend des paramètres SR correspondant à une pluralité de numérologies de paramètres de couche physique sans fil ; et
la sélection, par le dispositif terminal sur la base de la configuration SR, d'un paramètre SR correspondant à une numérologie, s'il y a des données de liaison montante à envoyer sur un canal logique, LCH, du dispositif terminal, et la transmission (203) d'une SR au dispositif de réseau d'accès sur une ressource SR indiquée par le paramètre SR,
dans lequel la sélection, par le dispositif terminal sur la base de la configuration SR, d'un paramètre SR correspondant à la numérologie, s'il y a des données de liaison montante à envoyer sur un LCH du dispositif terminal, et la transmission (203) d'une SR au dispositif de réseau d'accès sur une ressource SR indiquée par le paramètre SR comprend :
lors de la détermination qu'au moins une numérologie correspondant au LCH possède un paramètre SR, et qu'une ressource SR indiquée par le paramètre SR est disponible, la sélection, par le dispositif terminal, d'un premier paramètre SR selon une politique prédéfinie, dans lequel le premier paramètre SR correspond à une première numérologie ; et la transmission (203) de la SR sur une première ressource SR indiquée par le premier paramètre SR,
dans lequel la politique prédéfinie comprend :
la sélection, par le dispositif terminal à partir d'une ressource SR disponible, du premier paramètre SR correspondant à la première ressource SR arrivée en premier.

2. Procédé selon la revendication 1, dans lequel la configuration SR comprend une pluralité de nombres maximaux de transmissions SR correspondant à une pluralité de LCH du dispositif terminal, et le nombre maximal de transmissions SR sur le LCH est utilisé pour indiquer un nombre maximal total de fois pendant lesquelles la SR est transmise sur le LCH.

3. Procédé selon la revendication 1 ou 2, dans lequel la sélection, par le dispositif terminal sur la base de la configuration SR, d'une configuration de paramètre SR correspondant à la numérologie, s'il y a des données de liaison montante à envoyer sur un LCH du dispositif terminal, et la transmission d'une SR au dispositif de réseau d'accès sur une ressource SR indiquée par le paramètre SR comprend :
si un nombre de transmissions SR sur une première ressource SR atteint un premier nombre maximal de transmissions SR mais n'atteint pas le nombre maximal de transmissions SR sur le LCH, lors de la détermination du fait qu'en plus de la première numérologie, le LCH correspond également à une seconde numérologie, et qu'une seconde ressource SR indiquée par un second paramètre SR correspondant à la seconde numérologie est disponible, la sélection, par le dispositif terminal, du second paramètre SR selon une politique prédéfinie, et la transmission de la SR sur la seconde ressource SR.

4. Dispositif terminal (1000), comprenant un processeur (1001) et un émetteur-récepteur (1002), dans lequel
l'émetteur-récepteur (1002) est couplé de manière communicative au processeur (1001), et est configuré pour obtenir une configuration SR envoyée par un dispositif de réseau d'accès, dans lequel la configuration SR comprend des paramètres SR correspondant à une pluralité de numérologies ;
le processeur (1001) est configuré pour sélectionner, sur la base de la configuration SR, un paramètre SR correspondant à une numérologie, s'il y a des données de liaison montante à envoyer sur un premier LCH du dispositif terminal ; et
l'émetteur-récepteur (1002) est également configuré pour transmettre une SR au dispositif de réseau d'accès sur une ressource SR indiquée par le paramètre SR,
dans lequel le fait que le processeur est configuré pour sélectionner, sur la base de la configuration SR, un paramètre SR correspondant à la numérologie, s'il y a des données de liaison montante à envoyer sur un premier LCH du dispositif terminal comprend :
lorsqu'il est déterminé qu'au moins une numérologie correspondant au premier LCH a un paramètre SR, et qu'une ressource SR indiquée par le paramètre SR est disponible, la sélection d'un premier paramètre SR selon une politique prédéfinie, dans lequel le premier paramètre SR correspond à une première numérologie ; et
la transmission de la SR au dispositif de réseau d'accès sur une ressource SR indiquée par le paramètre SR comprend :
la transmission de la SR au dispositif de réseau d'accès sur une première ressource SR indiquée par le premier paramètre SR,
dans lequel la politique prédéfinie comprend :
la sélection, par le dispositif terminal à partir d'une ressource SR disponible, du premier paramètre SR correspondant à la première ressource SR arrivée en premier.

5. Dispositif terminal (1000) selon la revendication 4, dans lequel la configuration SR comprend une pluralité de nombres maximaux de transmissions SR correspondant à une pluralité de LCH du dispositif terminal, et le nombre maximal de transmissions SR sur le LCH est utilisé pour indiquer un nombre maximal total de fois pendant lesquelles la SR est transmise sur le LCH.

6. Dispositif terminal (1000) selon la revendication 4 ou 5, dans lequel le fait que le processeur est configuré pour sélectionner, sur la base de la configuration SR, une configuration de paramètre SR correspondant à la numérologie, s'il y a des données de liaison montante à envoyer sur un premier LCH du dispositif terminal comprend :
si un nombre de transmissions SR sur une première ressource SR atteint un premier nombre maximal de transmissions SR mais n'atteint pas le nombre maximal de transmissions SR sur le premier LCH,
lors de la détermination du fait qu'en plus de la première numérologie, le premier LCH correspond également à une seconde numérologie, et qu'une seconde ressource SR indiquée par un second paramètre SR correspondant à la seconde numérologie est disponible, la sélection du second paramètre SR selon une politique prédéfinie, et le fait d'ordonner à l'émetteur-récepteur de transmettre la SR sur la seconde ressource SR.

7. Support de stockage lisible par ordinateur, comprenant une instruction, dans lequel, lorsque l'instruction est exécutée sur un dispositif terminal (1000), le dispositif terminal (1000) est activé pour réaliser le procédé selon l'une quelconque des revendications 1 à 3.

8. Produit de programme informatique, comportant un code de programme informatique, dans lequel, lorsque le code de programme informatique est exécuté par une unité de communication, une unité de traitement, un émetteur-récepteur ou un processeur d'un dispositif terminal, le dispositif terminal est autorisé à réaliser le procédé selon l'une quelconque des revendications 1 à 3.
